# NEUE EUROPÄISCHE PATENTSCHRIFT

(11) **EP 1 658 451 B2**
(45) Veröffentlichungstag und Bekanntmachung des Hinweises auf die Entscheidung über den Einspruch: **01.03.2017**
(45) Hinweis auf die Patenterteilung: 20.03.2013
(21) Anmeldenummer: 04762419.2
(22) Anmeldetag: 16.07.2004
(51) Int. Cl.: B60N 2/06, B29C 45/16, F16H 25/20, B60N 2/44, B60N 2/22

(54) **VERSTELLGETRIEBE FÜR EIN KRAFTFAHRZEUG UND VERFAHREN ZUR HERSTELLUNG SOLCHES VERSTELLGETRIEBES**
ADJUSTABLE MECHANISM FOR A MOTOR VEHICLE ARTICLES AND METHOD OF MAKING SUCH
MÉCANISME DE RÉGLAGE POUR VÉHICULE AUTOMOBILE ET PROCÉDÉ DE FABRICATION DE CETTE MÉCANISME

(30) Priorität: 08.08.2003 DE 10337475
(43) Veröffentlichungstag der Anmeldung: 24.05.2006
(60) Teilanmeldung: 10164287.4
(73) Patentinhaber: Brose Fahrzeugteile GmbH & Co. Kommanditgesellschaft, Coburg, Max-Brose-Straße 1 96450 Coburg (DE)
(72) Erfinder: HOFFMANN, Matthias, 96145 Sesslach (DE); BAUERSACHS, Andrea, 96237 Ebersdorf (DE); PRAUSE, Andreas, 96450 Coburg (DE)
(74) Vertreter: Maikowski & Ninnemann Patentanwälte Partnerschaft mbB
(86) Internationale Anmeldenummer: PCT/DE2004/001569
(87) Internationale Veröffentlichungsnummer: WO 2005/015054

(56) Entgegenhaltungen:
- EP-A2- 0 683 031
- EP-B1- 1 068 093
- DE-A- 19 815 283
- DE-C1- 19 807 605
- DE-U1- 8 508 681
- FR-A- 2 580 759
- US-A- 2 128 483
- US-A- 2 201 670
- US-A- 2 619 845
- US-A- 5 664 457
- US-A- 5 924 668
- US-B1- 6 233 815
- SCHMIDT H: "Schneckengetriebe mit Schneckenrädern aus Hostaform" ANTRIEBSTECHNIK, KRAUSSKOPF VERLAG FUR WIRTSCHAFT GMBH. MAINZ, DE, Bd. 24, Nr. 3, 1985, Seiten 61-67, XP002108858 ISSN: 0722-8546
- HABERSTROH E: "LASERSCHWEISSEN IN DER MIKROTECHNIK WENIG ENERGIE HOHE FESTIGKEIT" PLASTVERARBEITER, ZECHNER UND HUETHIG VERLAG GMBH. SPEYER/RHEIN, DE, Bd. 51, Nr. 9, September 2000 (2000-09), Seite 60,62, XP000951390 ISSN: 0032-1338
- 'Adieu Montage' PLASTIKVERARBEITER Nr. 7, 2003, Seiten 18 - 21
- KÜNNE B.: 'Einführung in die Maschinenelemente Gestaltung - Berechnung - Konstruktion', Bd. 2, 2001, SPRINGER FACHMEDIEN GMBH, WIESBADEN Seite 780
- A. HOEFLER: 'Zahnradgetriebe' MASCHINENBAU & PHYSIK FÜR SCHULE, BERUF UND STUDIUM Nr. 3, 23 November 2005, Seiten 1 - 13
- W. MATEK ET AL.: 'Machinenelemente', Bd. 15.14, 1984, FRIEDR. VIEWEG & SOHN VERLAGSGESELLSCHAFT MBH, BRAUNSCHWEIG Seiten 15 - 15.14
- D. W. DUDLEY ET AL.: 'Zahnräder', 1961, SPRINGER-VERLAG, BERLIN - GÖTTINGEN - HEIDELBERG Seiten 32-34 - 211
- W. BEITZ, PROFESSOR, DR.-ING. E.H. DR.-ING ET AL.: 'Taschenbuch für den Maschinenbau', Bd. 20, 2001, SPRINGER-VERLAG, BERLIN - HEIDELBERG - NEW YORK Seiten 143 - 144

## Beschreibung

Die Erfindung betrifft ein Verstellgetriebe für ein Kraftfahrzeug nach dem Oberbegriff des Anspruchs 1 und ein Verfahren nach dem Anspruchs 35.

Ein derartiges Verstellgetriebe dient zur Einstellung eines Verstellteiles in einem Kraftfahrzeug, insbesondere eines Sitzteiles, und umfasst eine (um ihre Längsachse drehbare) Spindelmutter, die einerseits eine Innenverzahnung aufweist, über die sie mit einer (vorzugsweise feststehenden, d.h. drehfest gelagerten) Spindel zusammenwirkt, und die andererseits eine Außenverzahnung aufweist, über die sie mit einem weiteren Getriebeelement, insbesondere einer Antriebsschnekke, in Eingriff steht. Die Außenverzahnung der Spindelmutter erstreckt sich dabei auf deren äußerer Oberfläche (Umfangsfläche). Ein derartiges Verstellgetriebe ist beispielsweise aus der FR 2 580 759 A1 bekannt.

Die US 5 664457 wind als nächst liegenden stand der Technik angesehen.

Gemäss einer bevorzugten Anwendung kann dieses Getriebe dazu dienen, ein Sitzteil relativ zu einem anderen Sitzteil zu verschieben, beispielsweise eine erste Schiene einer Schienenlängsführung, an der ein in Sitzlängsrichtung verstellbarer Kraftfahrzeugsitz befestigt ist, relativ zu einer zweiten Schiene der Schienenlängsführung, die an einer Bodenbaugruppe des entsprechenden Kraftfahrzeuges zu befestigen ist, zu verschieben. Dabei wird die feststehende Spindel an einem der relativ zueinander verstellbaren Kraftfahrzeugteile befestigt und die Spindelmutter zusammen mit dem weiteren Getriebeelement sowie einer zugeordneten Antriebsvorrichtung (z.B. einem Antriebsmotor) an dem anderen Kraftfahrzeugteil angeordnet. Wird bei einer solchen Anordnung die Spindelmutter mittels der durch die Antriebsvorrichtung antreibbaren Antriebsschnecke gedreht, so bewegt sie sich hierbei in Längsrichtung entlang der feststehenden Spindel, was zu der gewünschten Relativbewegung der beiden Fahrzeugteile führt.

Derartige Verstellgetriebe werden in Kraftfahrzeugen in zunehmend großer Zahl benötigt, um Sitzteile und andere Fahrzeugteile, wie z. B. eine türseitige Armlehne, eine Mittelkonsole usw., in ihrer Lage einstellen und damit an die Bedürfnisse jeweils anderer Fahrzeuginsassen anpassen zu können.

Der Erfindung liegt daher das Problem zugrunde, ein Verstellgetriebe der eingangs genannten Art zu schaffen, das bei kompaktem Aufbau unter Verwendung möglichst leichter Materialien zugleich eine große Stabilität aufweist.

Dieses Problem wird erfindungsgemäß durch die Schaffung eines Verstellgetriebes mit den Merkmalen des Anspruches 1 gelöst.

Danach wird die Außenverzahnung der Spindelmutter durch radial (bezüglich der Achse der Spindelmutter) nach innen weisende Vertiefungen der äußeren Oberfläche der Spindelmutter gebildet, deren Zahntiefe zu mindestens einem axialen Ende der Spindelmutter hin abnimmt, insbesondere besonders vorteilhaft gegen Null geht.

Hierdurch wird eine erhöhte Stabilität der Spindelmutter erreicht. Dies ist insbesondere deswegen von besonderer Bedeutung, da an einem Verstellgetriebe eines Kraftfahrzeugs, insbesondere bei der Verwendung dieses Verstellgetriebes zur Einstellung eines Sitzteiles, in einem Crash-Fall erhebliche Kräfte auftreten können, die jedoch nicht zu einem Durchrutschen der Spindelmutter auf der zugeordneten Spindel führen dürfen. Insbesondere werden durch die Außenverzahnung verursachte Kerbspannungseffekte verhindert, die in einem Crash-Fall zu einem erhöhten Bruchrisiko führten. Vorteilhaft ist dabei eine kontinuierliche Abnahme der Zahntiefe in axialer Richtung von einem mittleren Bereich der Verzahnung hin zu einem axialen Ende der Spindelmutter. Grundsätzlich ist jedoch auch eine im Wesentlichen sprunghafte Änderung der Zahntiefe zu einem axialen Ende hin möglich.

In beiden Fällen ist vorgesehen, dass sich die Außenverzahnung der Spindelmutter in axialer Richtung nur über einen Teil der axialen Ausdehnung der äußeren Oberfläche der Spindelmutter erstreckt, indem die Spindelmutter in axialer Richtung jenseits der Außenverzahnung mindestens einen, nicht mit einer Außenverzahnung versehenen, ringartigen (insbesondere zylindrischen) Endabschnitt (mit einem definierten Durchmesser) aufweist. In diesem Fall geht die Außenverzahnung der Spindelmutter in dem mindestens einen axialen Endabschnitt, zu dessen axialem Ende hin ihre Zahntiefe abnimmt, axial in einen Abschnitt der Spindelmutter über, der keine Außenverzahnung aufweist, also frei von Verzahnungsbereichen ist. Dieser Endabschnitt kann so dünn ausgestaltet sein, dass er im Wesentlichen eine Linie (mit minimaler Ausdehnung in axialer Richtung) bildet, die sich kreisringförmig entlang der äußeren Oberfläche der Spindelmutter erstreckt.

Soweit die Spindelmutter nur einen nicht mit einer Außenverzahnung versehenen axialen Endabschnitt aufweist, schließt sich dieser bevorzugt (in axialer Richtung) an dasjenige Ende der Außenverzahnung an, an dem in einem typischen Crash-Fall die höchste mechanische Belastung zu erwarten ist.

Die erfindungsgemäße Lösung wird in einer konkreten Ausführungsform dadurch umgesetzt, dass die Spindelmutter an ihren axialen Endabschnitten (beidseits der Außenverzahnung) jeweils ohne Verzahnung ausgebildet ist und dort eine Zylinderfläche mit einem definierten Durchmesser bildet. Zwischen diesen beiden Endabschnitten der Spindelmutter erstreckt sich die Außerverzahnung, die durch radial nach innen weisende Vertiefungen - bezogen auf den Durchmesser der verzahnungsfreien Endabschnitte - gebildet ist.

Bevorzugt ragt die Außenverzahnung in radialer Richtung betrachtet nicht über den mindestens einen verzahnungsfreien Endabschnitt der Spindelmutter hinaus. Mit anderen Worten ausgedrückt ist der maximale radiale Abstand der Außenverzahnung von der Längsachse (Mittel- bzw. Drehachse) der Spindelmutter kleiner oder allenfalls gleich dem Radius des mindestens einen verzahnungsfreien Endabschnittes der Spindelmutter.

Zur Vergrößerung des Abstützdurchmessers beim Zusammenwirken mit dem weiteren Getriebeelement ist die Außenverzahnung der Spindelmutter vorzugsweise einer Schneckenradverzahnung angenähert, also im wesentlichen als Globoidverzahnung ausgebildet. Dabei ist jedoch - in axialer Richtung der Spindelmutter betrachtet - im mittleren Bereich der Verzahnung ein zylindrischer Anteil im Zahnverlauf beispielsweise mit einem Evolventenprofil ausgeführt, um die Toleranzlage des weiteren Getriebeelementes (insbesondere in Form einer Schnecke) axial zur Spindelmutter zu erweitern und hierdurch Geräuschprobleme zu vermeiden.

Die Außenverzahnung der Spindelmutter ist also an ihren axialen Rändern globoidartig ausgebildet. Sie weist einen stetigen Übergang vom zylindrischen Anteil in die verzahnungsfreien axialen Endabschnitte der Spindelmutter auf. Dieser stetige Übergang vom zylindrischen Anteil der Außenverzahnung zu dem jeweiligen verzahnungsfreien axialen Endabschnitt wird durch eine stetige (kontinuierliche) Verringerung der Verzahnungshöhe in radialer Richtung erreicht.

Die vorbeschriebenen Maßnahmen, die bei einer vorgegebenen, möglichst kompakten Ausführung der Spindelmutter zugleich eine besondere Stabilität sicherstellen, erlauben insbesondere die Herstellung der Spindelmutter (durch Spritzgießen) aus Kunststoff, z. B. PA, POM oder PEEK.

Um die Tragfähigkeit der Innenverzahnung (in Form eines Innengewindes) der Spindelmutter zu erhöhen, erstreckt sich diese in axialer Richtung über eine größere Länge als die Außenverzahnung. Die Innenverzahnung erstreckt sich dabei vorzugsweise in die beiden (an ihrem äußeren Umfang unverzahnten) Endabschnitte der Spindelmutter hinein.

Die Tragfähigkeit der Innenverzahnung (in Form eines Innengewindes) der Spindelmutter wird dadurch erhöht, dass die Zahndicke der Zahnelemente der Innenverzahnung größer ist als die Lückenweite der Innenverzahnung, und zwar vorzugsweise doppelt so groß oder sogar mehr als doppelt so groß. Der Begriff "Verzahnung" wird dabei vorliegend in einer allgemeinen Bedeutung verstanden, so dass der Begriff "Innenverzahnung" der Spindelmutter insbesondere ein Innengewinde umfasst, über das die Spindelmutter mit einer Spindel zusammenwirkt.

Die Spindelmutter und das mit deren Außenverzahnung zusammenwirkende weitere Getriebeelement, insbesondere in Form einer Schnecke, sind vorzugsweise in einem Getriebegehäuse angeordnet, das aus mittels Steckverbindungen zusammensteckbaren Platten besteht, und zwar vorzugsweise aus zwei Paaren einander jeweils gegenüberliegender Gehäuseteile, insbesondere in Form von Platten. Hierbei sind gemäß einer Vorzugsvariante zwei im Querschnitt U-förmige Gehäuseplatten vorgesehen, an deren beiden Stirnseiten (gebildet jeweils durch die Schenkel der im Querschnitt U-förmigen Gehäuseplatten) zusätzliche Gehäuseelemente, insbesondere in Form von Lagerplatten, angeordnet sind, die der Lagerung der beiden axialen Enden der Spindelmutter dienen. Diese kann hierzu an ihren axialen Enden jeweils mit einem Lagerbund versehen sein. Alternativ können auch die beiden Endabschnitte der Spindelmutter unmittelbar zur Lagerung der Spindelmutter in dem Getriebegehäuse dienen. Im letztgenannten Fall können die zusätzlichen Lagerplatten des Getriebegehäuses entfallen und die beiden U-förmigen Gehäuseplatten unmittelbar zur Lagerung der Spindelmutter verwendet werden.

Für eine Leichtbauweise des Verstellgetriebes ist auch das Getriebegehäuse aus Kunststoff hergestellt, wobei der für die Lagerplatten verwendete Kunststoff zur Optimierung der Reibpaarung auf den für den Lagerbund der Spindelmutter verwendeten Kunststoff abgestimmt ist. Ferner wird für die stirnseitigen Lagerstellen (Lagerplatten) oder das Gehäuse insgesamt bevorzugt ein wärmeableitender Kunststoff oder metallischer Werkstoff verwendet.

Gemäß einer bevorzugten Ausführungsform der Erfindung weisen die in den Lagerplatten vorgesehenen Lageröffnungen für die Spindelmutter jeweils einen von der jeweiligen Lagerplatte abstehenden Rand auf, um die Lagerfläche zu vergrößern. Dieser wird zur Stabilisierung von den beiden U-förmigen Gehäusehälften des Getriebegehäuses umgriffen.

In einer bevorzugten Weiterbildung weist das Getriebegehäuse in mindestens einer seitlichen Begrenzungswand eine Aussparung auf, in die die Spindelmutter oder das mit deren Außerverzahnung zusammenwirkende weitere Getriebeelement radial eingreift. Bei dieser Aussparung kann es sich einerseits um eine (fensterartige) Öffnung in der entsprechenden Begrenzungswand oder auch nur um eine Einbuchtung handeln. Dabei sind der Spindelmutter bevorzugt zwei Aussparungen in einander gegenüberliegenden Begrenzungswänden zugeordnet und dem weiteren Getriebeelement eine Aussparung auf der der Spindelmutter gegenüberliegenden Seite.

Wichtig ist, dass diese Aussparungen radial bezüglich des jeweiligen Getriebeelementes (Spindelmutter oder Schnecke) angeordnet sind, also in radialer Richtung von der Drehachse des jeweiligen Getriebeelementes (Spindelmutter oder Schnecke) beabstandet sind. Es handelt sich also nicht um Lageröffnungen, in die die Getriebeelemente axial eingreifen, sondern um Aussparungen, in die die Getriebeelemente mit ihren Verzahnungsbereichen radial hineinragen, ohne dort gelagert zu sein. Hierdurch wird der für das Verstellgetriebe erforderliche Bauraum weiter minimiert. Bei der Ausgestaltung der Aussparungen als Öffnungen in der jeweiligen Begrenzungswand kann zudem noch die Geräuschentwicklung im Betrieb durch Vermeidung von Resonanz reduziert werden.

An den Gehäuseplatten können weiterhin federnde Elemente angeordnet sein, die bei Verwendung einer Mehrkomponenten-Spritzgusstechnik aus einem anderen Kunststoff bestehen können als die Gehäuseplatten selbst, um eine akustische Entkopplung zwischen dem Getriebegehäuse und dem zugeordneten Fahrzeugteil zu erzielen.

Bei geeigneter Gleitpaarung hinsichtlich der Lagerung der Spindelmutter am Getriebegehäuse können Anlaufscheiben zur Lagerung der Spindelmutter ganz entfallen. Gegebenenfalls werden bevorzugt Stahlscheiben als Anlaufscheiben eingesetzt, die sich durch eine gute Wärmeabfuhr und einen niedrigen Reibwert auszeichnen.

Ferner kann aus Gründen der Stabilisierung der Spindelmutter auf einem oder jedem Lagerbund, der axial an einen jeweiligen axialen Endabschnitt der Spindelmutter anschließt, eine vorzugsweise aus Metall, insbesondere Stahl, bestehende Scheibe bzw. ein Armierungsring vorgesehen sein. Die Scheibe bzw. der Armierungsring weist hierzu einen möglichst großen Durchmesser auf, der beispielsweise mit dem Durchmesser der mit der Außenverzahnung versehenen äußeren Oberfläche der Spindelmutter übereinstimmen kann. Dieses Element kann dann gleichzeitig als Anlaufscheibe dienen, auch mit dem Ziel der Geräuschreduzierung.

Ferner kann an der Spindelverzahnung, der die Spindelmutter durchgreifenden Gewindespindel ein Schneidring ausgebildet sein.

Gemäß einer bevorzugten Weiterbildung der Erfindung werden die Gehäuseplatten, insbesondere im Bereich ihrer Steckverbindungen, (zusätzlich) durch Schweißen, insbesondere Ultraschall- oder Laserschweißen, miteinander verbunden. Hierbei ist das Material der äußeren, U-förmigen Gehäuseplatten vorzugsweise für die zum Schweißen verwendete Laserstrahlung transparent und das Material der inneren Lagerplatten des Getriebegehäuses (z. B. durch Zugabe von Ruß) nicht-transparent im Hinblick auf die Laserstrahlung ausgeführt, so dass durch teilweises Aufschmelzen der inneren Lagerplatten eine Verbindung mit den äußeren, U-förmigen Gehäuseplatten herstellbar ist.

Das Getriebegehäuse wird bevorzugt in einer im Querschnitt U-förmigen Halterung aufgenommen, von deren Schenkeln Befestigungsflansche abstehen, die zur Befestigung der Halterung (zusammen mit dem Getriebegehäuse) an dem zugeordneten Fahrzeugteil, z. B. einer Sitzschiene, dienen.

Die seitlichen Schenkel der Halterung weisen Durchgangsöffnungen für die mit der Spindelmutter zusammenwirkende Gewindespindel auf, und der Haltewinkel ist bevorzugt derart biegeelastisch ausgebildet, dass in einem Crash-Fall die seitlichen Schenkel durch Verbiegen im Bereich ihrer Durchgangsöffnungen mit der Spindelverzahnung in Eingriff geraten und verhaken.

Ein Verfahren zur Herstellung eines erfindungsgemäßen Verstellgetriebes mit einer aus Kunststoff bestehenden Spindelmutter und einem aus Kunststoff bestehenden Getriebegehäuse, das Lagerplatten für die Spindelmutter umfasst, ist gemäß Anspruch 35 dadurch charakterisiert, dass die Spindelmutter und zumindest die Lagerplatten durch Spritzgießen in ein und demselben Werkzeug (in einem mehrstufigen Spritzgussverfahren) hergestellt werden, und zwar vorzugsweise nacheinander in zwei aufeinander folgenden Einspritzvorgängen. Hierdurch ist die Spindelmutter nach Abschluss des Spritzgussprozesses bereits in den zugeordneten Lagerstellen der Lagerplatten des Getriebegehäuses gelagert. Es ist dann nicht mehr erforderlich, die Spindelmutter nachträglich in die entsprechenden Lagerstellen (insbesondere Lageröffnungen) einzuführen.

Anschließend wird gemäß einer Variante des erfindungsgemäßen Verfahrens das weitere Getriebeelement (also insbesondere eine Schnecke) in das Werkzeug eingelegt und es werden sodann in demselben Spritzgusswerkzeug auch die beiden U-förmigen Gehäusehälften des Getriebegehäuses hergestellt.

Alternativ kann die Schnecke jedoch auch nach der Herstellung der Spindelmutter und des Getriebegehäuses in einem Spritzgusswerkzeug nachträglich in das Gehäuse eingeklippst werden.

Bei dem gemeinsamen Spritzgießen sämtlicher Gehäuseplatten in einem Spritzgusswerkzeug werden die Gehäuseplatten schon bei der Herstellung selbst miteinander verbunden, so dass kein nachträgliches Zusammenstecken der Gehäuseplatten mehr erforderlich ist.

Alternativ können jedoch die einzelnen Gehäuseplatten auch separat hergestellt und anschließend zusammengesteckt werden. Die Steckverbindungen werden dann durch Umformen, Kleben oder thermische Verfahren wie Laserschweißen, Ultraschallschweißen oder Heißverstemmen aneinander fixiert.

Sofern die Gehäuseplatten des Getriebegehäuses, insbesondere im Bereich der Steckverbindungen, durch Laserschweißen miteinander verbunden werden, wird vor oder während des Schweißprozesses axiales Lagerspiel zwischen den inneren Gehäuseplatten (Lagerplatten) des Getriebegehäuses und der Spindelmutter beseitigt (herausgedrückt). Hierzu wird eine definierte, axial wirkende Kraft auf die inneren Gehäuseplatten (Lagerplatten) aufgebracht; anschließend werden diejenigen Bereiche der inneren Gehäuseplatten (Lagerplatten) durch Laser angeschmolzen, die der Bildung einer Steckverbindung mit den äußeren U-förmigen Gehäuseplatten dienen, wobei der Schweißprozess abgeschlossen wird, wenn eine geeignete Kraft-Weg-Messung anzeigt, dass die inneren Lagerplatten an den entsprechenden Endabschnitten der Spindelmutter anliegen.

Um einen derartigen axialen Spielausgleich zu ermöglichen, sind die Steckverbindungen zwischen den inneren Lagerplatten und den äußeren U-förmigen Gehäuseplatten mit axialem Spiel ausgeführt. Beim Laserschweißen der Lagerplatten entsteht eine Schmelze, die die spielbedingten Spalte ausfüllt und sich mit der Oberfläche der anderen, U-förmigen äußeren Gehäuseplatte verbindet.

Bei der Durchführung eines Verfahrens zur Montage eines in einem Getriebegehäuse angeordneten Verstellgetriebes für ein Kraftfahrzeug wird mindestens ein Gehäuseteil des Getriebegehäuses mit einer weiteren Gehäusebaugruppe in Eingriff gebracht und das Gehäuseteil an der weiteren Gehäusebaugruppe festgelegt, indem im Eingriffsbereich des Gehäuseteiles mit der weiteren Gehäusebaugruppe Material angeschmolzen wird. Nach Beendigung der zum Anschmelzen dienenden Erwärmung des Eingriffsbereiches sowie einer anschließenden Abkühlung des Eingriffsbereiches ist dann das entsprechende Gehäuseteil mit der zugeordneten weiteren Gehäusebaugruppe nach Art einer Schweißverbindung verbunden. Die genannten Elemente der Getriebegehäuses bestehen dabei bevorzugt aus Kunststoff.

Dieses Verfahren soll in der Weise ausgestaltet sein, dass unter Berücksichtigung des stets vorhandenen Fertigungs- und Montagespiels eine möglichst definierte Verbindung zwischen der Gehäuseplatte und der zugeordneten weiteren Gehäusebaugruppe erreicht wird, sowie Spiel im Verstellgetriebe und in den Lagerstellen des Verstellgetriebes in dem Getriebegehäuse reduziert wird.

Hierzu ist vorgesehen, dass das Gehäuseteil und die Gehäusebaugruppe beim Anschmelzen des Materials im Eingriffsbereich elastisch zueinander verspannt sind. Dies entspricht einem Schweißprozess unter Wirkung einer äußeren Vorspannung.

Unter der Wirkung der (von außen aufgebrachten) Vorspannung kann während des Anschmelzens eine Setzbewegung stattfinden, in der sich das Gehäuseteil und die zugeordnete weitere Baugruppe unter der Wirkung der Vorspannkräfte derart (in Vorspannrichtung) zueinander bewegen, dass ein eventuell vorhandenes Spiel im Verstellgetriebe und/oder Getriebegehäuse möglichst ausgeglichen wird und das Gehäuseteil schließlich definiert an der zugeordneten weiteren Gehäusebaugruppe anliegt.

Hierzu greift an dem mindestens einen Gehäuseteil und/oder an der weiteren Gehäusebaugruppe eine Spannvorrichtung an, um das Gehäuseteil und die weitere Gehäusebaugruppe zueinander zu verspannen. (Indem die Gehäuseplatte mittels einer zugeordneten Spannvorrichtung mit einer definierten Vorspannkraft beaufschlagt wird und die weitere Gehäusebaugruppe z.B. räumlich fixiert wird, steht indirekt die weitere Gehäusebaugruppe unter Vorspannung.)

Um hierbei unter Berücksichtigung der Relativbewegung des Gehäuseteiles und der weiteren Gehäusebaugruppe die Spannkräfte möglichst konstant zu halten, wirkt die Spannvorrichtung bevorzugt unter Zwischenschaltung eines elastischen Elementes, insbesondere in Form einer Druckfeder, auf das zugeordnete Element des Gehäuses ein.

Zur Bildung eines Eingriffsbereiches werden das mindestens eine Gehäuseteil und die weitere Gehäusebaugruppe bevorzugt entlang einer Montageachse miteinander in Eingriff gebracht, und zwar vorzugsweise durch Zusammenstecken, so dass der Eingriffsbereich durch einen Steckbereich gebildet wird.

Die Verspannung des mindestens einen Gehäuseteiles und der zugeordneten Gehäusebaugruppe kann einerseits entlang der Montageachse erfolgen oder andererseits auch mit einer Kraftkomponente quer zur Montageachse, insbesondere auch insgesamt senkrecht zur Montageachse.

Als weitere Gehäusebaugruppe kann ein zweites Gehäuseteil dienen, wobei die beiden Gehäuseteile durch Anschmelzen im Eingriffsbereich unmittelbar aneinander festgelegt werden.

Nach einer anderen Ausführungsform ist die weitere Gehäusebaugruppe zwischen einem ersten und einem zweiten Gehäuseteil aufgenommen, wobei die beiden Gehäuseteile mit jeweils einer Stirnseite der Gehäusebaugruppe in Eingriff gebracht und an der jeweils zugeordneten Stirnseite festgelegt werden, indem im Eingriffsbereich des jeweiligen Gehäuseteiles mit der zugeordneten Stirnseite der Gehäusebaugruppe Material des Gehäuseteiles und/oder der Gehäusebaugruppe angeschmolzen wird. Das Aufbringen von Spannkräften erfolgt hierbei bevorzugt in der Weise, dass die beiden Gehäuseteile zueinander verspannt werden, wodurch mindestens eines der Gehäuseteile gleichzeitig auch bezüglich der weiteren Gehäusebaugruppe verspannt wird.

Auch bei dieser speziellen Ausführungsform kann das Verspannen des mindestens einen Gehäuseteiles bezüglich der zugeordneten weiteren Gehäusebaugruppe in Richtung der Montageachse erfolgen oder entlang einer Richtung erfolgen, die eine Komponente senkrecht zur Montageachse aufweist, oder entlang einer Richtung erfolgen, die insgesamt senkrecht zur Montageachse orientiert ist.

Die weitere Gehäusebaugruppe kann dabei wiederum durch zwei Gehäuseelemente gebildet werden, die einander gegenüberliegen, und zwar senkrecht zu der Richtung, entlang der die beiden vorerwähnten Gehäuseteile einander gegenüberliegen.

Als Gehäuseteile und Gehäuseelemente, die bevorzugt aus Kunststoff bestehen, eignen sich insbesondere Gehäuseplatten.

Zum Anschmelzen des Materials im Eingriffsbereich des mindestens einen Gehäuseteiles mit der zugeordneten Gehäusebaugruppe kann ein Laser verwendet werden, mit dem ein Laserschweißprozess bewirkt wird.
Nicht anzuschmelzende Bereiche des Gehäuses, die während des Schweißprozesses der Laserstrahlung ausgesetzt sind, bestehen dabei bevorzugt aus einem für die verwendete Laserstrahlung durchlässigen Material, während die anzuschmelzenden Bereiche aus einem die verwendete Laserstrahlung absorbierenden Material bestehen.

Der Anschmelz- bzw. Schweißvorgang wird in Abhängigkeit von mindestens einem vorgebbaren Kriterium derart gesteuert, dass möglichst zuverlässig eine Verbindung zwischen dem Gehäuseteil und der weiteren Gehäusebaugruppe mit bestimmten, gewünschten Eigenschaften erzielt wird.

Hierzu kann die Dauer des Anschmelz- bzw. Schweißvorganges in Abhängigkeit von der Setzbewegung des mindestens einen Gehäuseteiles gesteuert werden, und zwar beispielsweise in Abhängigkeit von der Geschwindigkeit und/oder der Dynamik der Setzbewegung, so dass definierte Änderungen in der Geschwindigkeit der Setzbewegung oder definierte Änderungen der Reaktionskraft beim Verspannen des mindestens einen Gehäuseteiles bezüglich der weiteren Baugruppe als Kriterium herangezogen werden, dass der Anschmelz- bzw. Schweißvorgang beendet werden kann, weil das gewünschte Ergebnis erzielt ist. So können beispielsweise eine starke Abnahme der Geschwindigkeit der Setzbewegung oder ein starker Anstieg der Reaktionskraft beim Verspannen des mindestens einen Gehäuseteiles bezüglich der weiteren Gehäusebaugruppe darauf hindeuten, dass die angestrebte Setzbewegung zu einem spielfreien, definierten Anliegen des mindestens einen Gehäuseteiles an der zugeordneten Gehäusebaugruppe geführt hat.

Andererseits kann die Dauer des Anschmelzvorganges auch in Abhängigkeit von dem Ausmaß (Umfang) der Setzbewegung gesteuert werden, so dass der Anschmelzvorgang beendet wird, wenn bei der Setzbewegung des mindestens einen Gehäuseteiles relativ zu der weiteren Gehäusebaugruppe ein bestimmter, vorgebbarer Weg zurückgelegt worden ist. Diese Variante ist insbesondere dann vorteilhaft, wenn der Eingriffsbereich des mindestens einen Gehäuseteiles mit der zugeordneten weiteren Gehäusebaugruppe durch einen Steckbereich gebildet wird und dabei einer der beiden im Steckbereich zu verbindenden Steckabschnitte ein derartiges Übermaß aufweist, dass das mindestens eine Gehäuseteil und die zugeordnete weitere Gehäusebaugruppe erst dann definiert, spielfrei aneinander anliegen, wenn nach dem Anschmelzen des mit Übermaß gefertigten Steckabschnittes eine Setzbewegung der Gehäuseplatte bezüglich der zugeordneten weiteren Gehäusebaugruppe mit einem bestimmten Umfang, also einem bestimmten Mindestweg, erfolgt ist.

Andererseits kann aufgrund von Erfahrungswerten die Dauer des Anschmelz- bzw. Schweißvorganges auch von Anfang an festgelegt sein.

In dem Eingriffsbereich (Steckbereich) des mindestens einen Gehäuseteiles mit der weiteren Gehäusebaugruppe ist bevorzugt ein Freiraum vorgesehen, in den beim Anschmelzen des Materials gebildetes Schmelzgut einfließen kann.

Ferner kann die Qualität der Verbindung zwischen dem mindestens einen Gehäuseteil und der weiteren Gehäusebaugruppe, insbesondere hinsichtlich der Frage, ob diese beiden Gehäusekomponenten, wie gewünscht, definiert zueinander liegen, ebenfalls anhand des Ausmaßes der Bewegung des mindestens einen Gehäuseteiles bezüglich der zugeordneten weiteren Gehäusebaugruppe während des Anschmelzvorganges überprüft werden. Soweit im als Steckbereich ausgebildeten Eingriffsbereich des Gehäuseteiles mit der zugeordneten Gehäusebaugruppe ein Steckabschnitt bewusst mit einem definierten Übermaß gefertigt ist, muss die Setzbewegung zumindest einen Umfang erreicht haben, der dem gewählten Übermaß entspricht, damit eine definierte, Anlage der Gehäusekomponenten erreicht wird. Um dies sicherzustellen, kann vorgesehen sein, dass die Leistung des zum Anschmelzen verwendeten Lasers derart gesteuert wird, dass das Erreichen einer definierten Setzbewegung sichergestellt ist.

Weitere Merkmale und Vorteile der Erfindung werden bei der nachfolgenden Beschreibung von Ausführungsbeispielen anhand der Figuren deutlich werden.

Es zeigen:

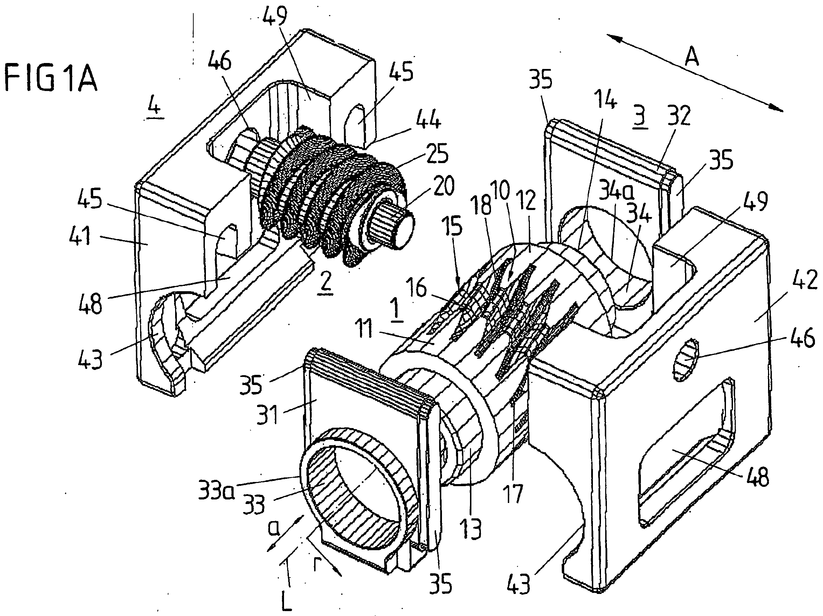

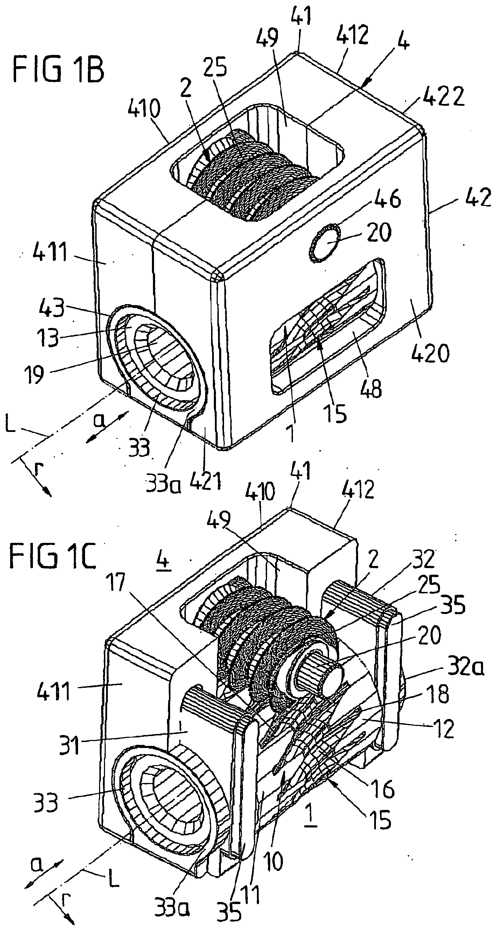

- Fig. 1 a: eine Explosionsdarstellung eines Verstellgetriebes für ein Kraftfahrzeug mit einem Getriebegehäuse;
- Fig. 1 b: das Verstellgetriebe aus Fig. 1 a im zusammengebauten Zustand;
- Fig. 1 c: das Verstellgetriebe aus Fig. 1a im zusammengebauten Zustand, teilweise aufgebrochen;
- Fig. 2: das Verstellgetriebe aus den Fig. 1a bis 1c mit einem zusätzlichen Getriebeelement in Form einer Spindel und mit einer Halterung;
- Fig. 3: eine bevorzugte Ausbildung der ineinander greifenden Gewinde der Spindel aus Fig. 2 einerseits und der Spindelmutter des Verstellgetriebes andererseits;
- Fig. 4a: eine Spannvorrichtung beim Einwirken auf eine Gehäuseplatte des Getriebegehäuses aus den Figuren 1a bis 1c während der Herstellung einer Verbindung dieser Gehäuseplatte mit weiteren Lagerplatten des Gehäuses durch Laserschweißen;
- Fig. 4b: ein Kraft-Weg-Diagramm zur Illustration der während des Schweißvorganges an der Spannvorrichtung wirkenden Reaktionskräfte;
- Fig. 5: eine perspektivische Darstellung einer Lagerplatte des Getriebegehäuses aus den Figuren 1a bis 1c;
- Fig. 6a: eine schematische Darstellung des Eingriffsbereiches einer Gehäuseplatte in eine zugeordnete Lagerplatte des Getriebegehäuses aus den Figuren 1a bis 1c vor dem Laserschweißen;
- Fig. 6b: eine schematische Darstellung des Eingriffsbereiches einer Lagerplatte in eine Gehäuseplatte des Getriebegehäuses aus den Figuren 1a bis 1c nach dem Laserschweißen;
- Fig.7: eine Abwandlung des zur Bildung eines Eingriffsbereiches vorgesehenen Steckabschnittes der Lagerplatte aus den Figuren 6a und 6b.

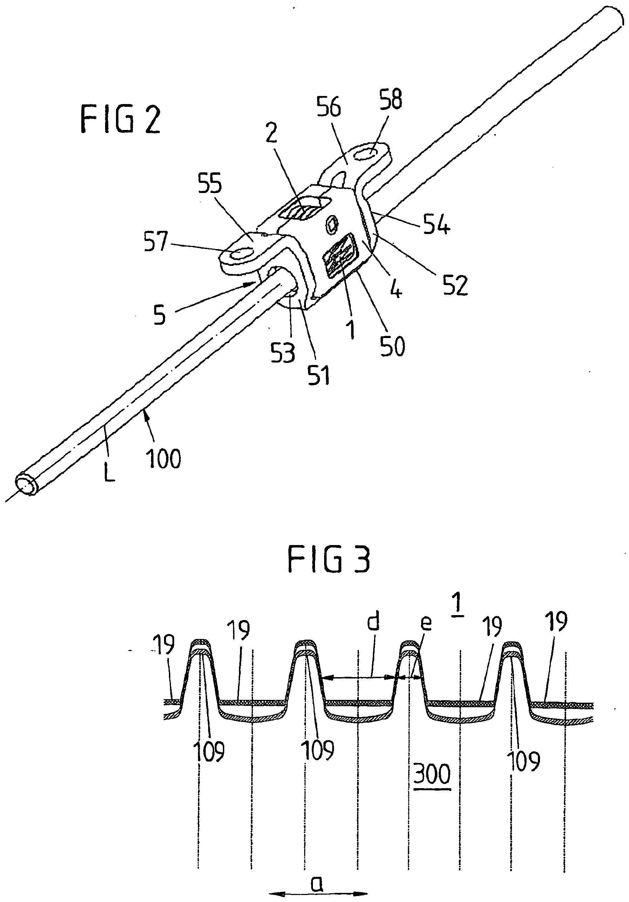

Das in den Fig. 1a bis 1c und 2 dargestellte Verstellgetriebe für ein Kraftfahrzeug, insbesondere zur Einstellung der Sitzlängsposition eines Kraftfahrzeugsitzes mittels einer Schienenlängsführung, umfasst eine feststehende (drehfest gelagerte) Gewindespindel 100, eine darauf drehbar angeordnete Spindelmutter 1 sowie eine die Spindelmutter antreibende Antriebsschnecke 2. Dabei sind die Spindelmutter 1 und die Antriebsschnecke 2 in einem Getriebegehäuse 3, 4 gelagert.

Zur Verwendung dieses Getriebes in einer Sitzlängsverstellung, die zwei zueinander verschiebliche, ineinander greifende Führungsschienen umfasst, wird die feststehende Gewindespindel 100 an einer der beiden Führungsschienen befestigt und wird das Getriebegehäuse 3, 4 zusammen mit der Spindelmutter 1 und der Schnecke 2 über eine Halterung 5 an der anderen Führungsschiene angeordnet und mit dieser verbunden. Der Antriebsschnecke 2 ist ein in den Figuren nicht dargestellter Antrieb, z. B. in Form eines Antriebsmotors zugeordnet, der bei Betätigung eine Drehbewegung der Antriebsschnecke 2 auslöst, welche wiederum zu einer Drehbewegung der mit der Schneckenverzahnung 25 über ihre Außenverzahnung 15 in Eingriff stehenden Spindelmutter 1 führt. Aufgrund des Zusammenwirkens der Spindelmutter 1 mit der drehfest gelagerten Gewindespindel 100 kommt es zu einer Verschiebung der Gewindespindel 100 relativ zu der Spindelmutter 1 entlang der Längsachse L von Spindelmutter 1 und Gewindespindel 100. Dies führt wiederum zu einer Relativbewegung der beiden Führungsschlenen entlang jener Richtung L, da die eine Führungsschiene der Gewindespindel 100 und die andere Führungsschiene der Spindelmutter 1 zugeordnet ist und die Längsachse L von Spindelmutter 1 und Gewindespindel 100 der Verstellrichtung der zueinander verschiebbaren Führungsschienen entspricht.

Derartige Verstellgetriebe für Kraftfahrzeugsitze sind bekannt. Nachfolgend werden die Besonderheiten des in den Figuren 1a bis 1c und Fig. 2 dargestellten Verstellgetriebes erläutert, die zu einem besonders kompakten, leichten und gleichzeitig stabilen Aufbau des Verstellgetriebes führen.

Die Spindelmutter 1 weist eine zylindrische Kontur (mit einer als Zylindermantel ausgebildeten äußeren Oberfläche 10) auf, in die eine Außenverzahnung 15 eingearbeitet ist und die an ihren beiden axialen Endabschnitten 11, 12 jeweils frei von Verzahnungsbereichen ist. Die Außenverzahnung 15 der Spindelmutter 1 ist dadurch charakterisiert, dass sie verglichen mit den verzahnungsfreien axialen Endabschnitten 11, 12 der Spindelmutter 1 in radialer Richtung r (senkrecht zur Längs- bzw. Drehachse L der Spindelmutter 1) nach innen weist. Das heißt, die Ausdehnung der Spindelmutter 1 in radialer Richtung r ist im Bereich der Außenverzahnung 15 kleiner oder abschnittsweise allenfalls genauso groß wie in den verzahnungsfreien Endabschnitten 11, 12, die sich in axialer Richtung a jeweils an die Außenverzahnung 15 anschließen. Alternativ kann die Spindelmutter 1 auch nur einen Endabschnitt ohne Außenverzahnung aufweisen.

Der mindestens eine verzahnungsfreie axiale Endabschnitt 11, 12 der Spindelmutter 1 kann dabei in axialer Richtung a der Spindelmutter 1 so dünn sein, dass er im Wesentlichen eine am äußeren Umfang der Spindelmutter 1 umlaufende Linie bildet, also die Außenverzahnung 15 der Spindelmutter 1 sich nahezu bis zum äußersten axialen Rand der Spindelmutter erstreckt und erst unmittelbar an diesem Rand in einen axialen Endabschnitt 11 bzw. 12 ohne Zahnungsbereiche übergeht.

Zur Vergrößerung des Abstützdurchmessers und -querschnitts beim Zusammenwirken der Außenverzahnung 15 der Spindelmutter 1 mit der Schneckenverzahnung 25 der auf einer Antriebswelle 20 gelagerten Antriebsschnecke 2 ist die Außenverzahnung 15 der Spindelmutter 1 einer Schneckenradverzahnung (Globoidverzahnung) angenähert, das heißt, die Außenverzahnung 15 ist im Wesentlichen globoidisch. Jedoch ist der in axialer Richtung a mittlere Bereich 16 der Außenverzahnung 15 in einem zylindrischen Anteil im Zahnverlauf mit einem Zahnprofil (z. B. nach Art einer Evolventenverzahnung) ausgeführt, um die Toleranzlage der Antriebsschnecke 2 axial zur Spindelmutter 1 zu erweitern und hierdurch Geräuschprobleme zu vermeiden. Beidseits des mittleren Bereiches 16 der Außenverzahnung 15 geht durch eine stetige radiale Verringerung der Zahntiefe (Zahnhöhe) in den axialen Randbereichen 17, 18 der Außenverzahnung 15 der Verzahnungsbereich der Spindelmutter 1 kontinuierlich in die verzahnungsfreien Endabschnitte 11, 12 der Spindelmutter 1 über.

Im Fall eines im Wesentlichen linienartigen verzahnungsfreien Endabschnittes 11, 12 der Spindelmutter 1 bedeutet dies, dass die Verringerung der Zahntiefe bzw. Zahnhöhe auf den Wert Null, entsprechend einem Übergang in einen verzahnungsfreien Endabschnitt 11, 12, erst unmittelbar am jeweiligen axialen Ende der Spindelmutter 1 erfolgt. Für eine maximale Stabilität vorteilhaft ist dabei, dass die Zahntiefe an mindestens einem axialen Ende der Spindelmutter gegen den Wert Null geht (den Wert Null annimmt), so dass dort ein (wenn auch in axialer Richtung beliebig dünner) Endabschnitt 11 bzw. 12 ohne Außenverzahnung gebildet ist.

Insgesamt trägt die beschriebene Ausbildung der äußeren Oberfläche 10 der Spindelmutter 1 mit der nach innen eingearbeiteten Außenverzahnung 15, die in radialer Richtung r nicht über die Endabschnitte 11, 12 hervorsteht, erheblich zu einer erhöhten Stabilität der Spindelmutter 1 bei, die dementsprechend aus Kunststoff als einem besonders leichten Werkstoff ausgeführt sein kann.

Eine weitere Besonderheit liegt darin, dass sich die als Gewinde ausgeführte Innenverzahnung 19 der Spindelmutter 1 in axialer Richtung a über eine größere Länge erstreckt als die Außenverzahnung 15, um die Tragfähigkeit des Gewindes zu erhöhen. Die Innenverzahnung 19 (in Form eines Innengewindes) erstreckt sich über die gesamte axiale Länge der Spindelmutter 1, also auch entlang der auf ihrer Außenseite verzahnungsfreien Endabschnitte 11, 12 (und gegebenenfalls auch entlang des jeweiligen Lagerbundes 13, 14, der keinen Bestandteil der Spindelmutter im engeren Sinne bildet). Ferner weisen die Zahnelemente (Gewindeelemente) der Innenverzahnung 19 (in Form eines Innengewindes) der Spindelmutter 1 eine Dicke d (Ausdehnung in axialer Richtung a) auf, die größer ist als die Lückenweite e, insbesondere mindestens doppelt so groß ist, z. B. entsprechend einem Verhältnis 70 : 30. Dementsprechend sind die Zahnelemente (Gewindeelemente) des Außengewindes 109 der Gewindespindel 100 erheblich dünner als diejenigen der Innenverzahnung 19 (Innengewinde) der Spindelmutter 1. Denn die Dicke der Verzahnungselemente (Gewindeelemente) der Gewindespindel 100 entspricht im Wesentlichen der Lückenweite e der Innenverzahnung 19 der Spindelmutter 1.

Die Spindelmutter 1 und die zugeordnete Antriebsschnecke 2 sind in einem aus Kunststoff bestehenden Getriebegehäuse 3, 4 angeordnet, dass aus einem Lagerbestandteil 3 mit zwei Lagerplatten 31, 32 und einem äußeren Gehäusebestandteil 4 mit zwei im Querschnitt im Wesentlichen U-förmigen Gehäuseplatten 41, 42 gebildet wird.

Die beiden aus Kunststoff bestehenden Lagerplatten 31, 32 weisen jeweils eine Lageröffnung 33, 34 als Lagerstelle für einen zugeordneten Lagerbund 13, 14 der Spindelmutter 1 auf, welcher jeweils stirnseitig in axialer Richtung von der Spindelmutter 1 absteht. Die beiden Lagerabschnitte 33, 34 werden gebildet durch Lageröffnungen und weisen im Vergleich zur Dicke der Lagerplatten 31, 32 eine vergrößerte Ausdehnung in axialer Richtung a auf, indem von der jeweiligen Lagerplatte 31, 32 ein entsprechender, die jeweilige Lageröffnung 33, 34 umgreifender Wandabschnitt 33a, 34a in axialer Richtung a senkrecht absteht. (Hierbei kann ein Axialspiel der Spindelmutter durch Verschieben der Lagerplatten 31, 32 in axialer Richtung minimiert werden.) Der Kunststoff für die Lagerplatten 31, 32, insbesondere deren Lagerstellen 33, 34 ist derart gewählt, dass sich eine optimale Reibpaarung beim Zusammenwirken mit dem jeweiligen Lagerbund 13, 14 der ebenfalls aus Kunststoff bestehenden Spindelmutter 1 ergibt. Die zugeordnete Antriebschnecke besteht demgegenüber vorzugsweise aus Metall.

Weiterhin kann der für die Herstellung der Lagerplatten 3 oder des Getriebegehäuses 3, 4 verwendete Kunststoff wärmeableitend sein, so dass im Betrieb des Verstellgetriebes an den Lagerstellen 33, 34 auftretende Wärme abgeleitet werden kann.

Die beiden ebenfalls aus Kunststoff bestehenden äußeren Gehäuseplatten 41, 42 des Getriebegehäuses 3, 4 sind im Querschnitt jeweils U-förmig ausgebildet mit einer Basisfläche 410 bzw. 420 sowie mit hiervon abstehenden seitlichen Schenkeln 411, 412 bzw. 421, 422. Sie weisen in ihren Schenkeln 411, 412 bzw. 421, 422 jeweils stirnseitig Ausnehmungen 45 auf, die zur Herstellung einer Steckverbindung über die Stirnseiten 35 der Lagerplatten 31, 32 steckbar (schiebbar) sind. Zusätzlich umgreifen die U-förmigen Gehäuseplatten 41, 42 im zusammengesteckten Zustand mit bogenförmigen Ausnehmungen 43, 44 die Lagerabschnitte 33, 34 der Lagerplatten 3, 4 und tragen zu deren Stabilisierung bei.

Wieanhand der Figuren 1b und 1c deutlich wird, sind die Lagerplatten 31, 32 im zusammengesteckten Zustand des Getriebegehäuses 3, 4 von den U-förmigen Gehäuseplatten 41, 42 im Wesentlichen vollständig umschlossen. Zur Lagerung der Antriebsschnecke 2 weisen die Gehäuseplatten 41, 42 entsprechende Lageröffnungen 46 auf.

In einer Abwandlung des anhand der Figuren beschriebenen Ausführungsbeispiels kann die Spindelmutter 1 auch unmittelbar mittels ihrer Endabschnitte 11, 12 in dem Griebegehäuse gelagert werden, und zwar direkt kreigbogenförmigen Ausnehmungen 43, 44 der U-förmigen äußeren Gehäuseplatten 41, 42. Die inneren Lagerplatten 31, 32 können dann entfallen.

Ferner weist jede der beiden Gehäuseplatten 41, 42 in ihrer Basisplatte 410 bzw. 420 eine Aussparung in Form einer fensterartigen Öffnung 48 auf, in die die Spindelmutter 1 mit ihrer Außenverzahnung 15 radial hineinragt. Die beiden einander gegenüberliegenden fensterartigen Öffnungen 48 erstrecken sich parallel zur Längsachse L (Drehachse) der Spindelmutter 1 und sind in radialer Richtung r von dieser beabstandet. Sie sind also im Wesentlichen senkrecht zu den Lageröffnungen 33, 34 für die Spindelmutter 1 orientiert.

In entsprechender Weise bilden die beiden U-förmigen Gehäuseplatten 41, 42 im zusammengebauten Zustand zwischen ihren Schenkeln 411, 412 und 421, 422 eine weitere fensterartige Öffnung 46 aus, die sich parallel zur Drehachse (Antriebswelle 20) der Antriebsschnecke 2 erstreckt und in radialer Richtung von dieser beabstandet ist. Dies ermöglicht ein radiales Eingreifen der Antriebsschnecke 2 mit ihrer Schneckenverzahnung 25 in die fensterartige Öffnung 49 auf ihrer der Spindelmutter 1 abgewandten Seite.

Durch die fensterartigen Öffnungen 48, 49 wird der kompakte Aufbau des Verstellgetriebes noch verbessert. Denn der Raum für die Spindelmutter 1 und die Antriebsschnecke 2 muss nicht vollständig im Inneren des Getriebegehäuses 3, 4 zur Verfügung gestellt werden, sondern die Getriebeelemente 1, 2 können teilweise in die seitlichen Begrenzungswände (Gehäuseplatten 41, 42) des Getriebegehäuses hineinragen. Gleichzeitig wird hierdurch eine Geräuschentwicklung innerhalb des Getriebegehäuses als Folge von Resonanzen verhindert.

An den beiden äußeren Gehäuseplatten 41, 42 und gegebenenfalls den Lagerplatten 31, 32 können federnde Elemente vorgesehen sein, z. B. in Form angespritzter Entkopplungselemente, um eine akustische Entkopplung von dem Fahrzeugteil (z. B. einem Sitzteil in Form einer Führungsschiene) zu realisieren, an dem das Getriebegehäuse 3, 4 angeordnet und befestigt wird. Diese federnden Elemente (Entkopplungselemente) können bei Verwendung eines Mehrkomponenten-Spritzgussverfahrens zur Herstellung der Gehäuseteile aus einem anderen Kunststoff bestehen als die Gehäuseteile selbst. Alternativ können entsprechende federnde Elemente auch als separate Bauteile am Getriebegehäuse 3, 4 angeordnet werden.

Zur Befestigung des Getriebegehäuses 3, 4 an einem Kraftfahrzeugteil in Form einer Führungsschiene für einen Kraftfahrzeugsitz dient gemäß Fig. 2 eine im Querschnitt im Wesentlichen U-förmige Halterung 5 aus Metall mit einer Basis 50 und zwei seitlichen Schenkeln 51, 52, die jeweils Durchgangsöffnungen 53, 54 für die Gewindespindel 100 aufweisen. Von den beiden Schenkeln 51, 52 der Halterung, zwischen denen das Gehäuse 3, 4 derart aufgenommen ist, dass den Schenkeln 51, 52 jeweils eine Lagerplatte 33, 34 gegenüberliegt (unter Zwischenlage der Schenkel 411, 412; 421, 422 der U-förmigen Gehäuseplatten 41, 42), steht jeweils ein Befestigungsflansch 55, 56 mit einer Befestigungsstelle in Form einer Befestigungsöffnung 57 bzw. 58 ab, die die Befestigung der Halterung 5 an einer Führungsschiene eines Kraftfahrzeugsitzes ermöglicht.

Aufgrund des stabilen Aufbaus des Verstellgetriebes 1, 2 und des zugeordneten Getriebegehäuses 3, 4 sowie aufgrund der stabilen Umfassung des Verstellgetriebes 1, 2 und des Getriebegehäuses 3, 4 mittels der Schenkel 51, 52 der U-förmigen Halterung 5 wird trotz der leichten und kompakten Bauweise des Verstellgetriebes 1, 2 und des Getriebegehäuses 3, 4 eine besondere Wiederstandsfähigkeit der gesamten Anordnung gegenüber äußeren Kräften, insbesondere in einem Crash-Fall erreicht. In einem Crash-Fall, insbesondere einem Front- oder einem Heck-Crash des entsprechenden Kraftfahrzeuges, muss sichergestellt sein, dass die Spindelmutter 1 nicht entlang der Längsrichtung der Gewindespindel 100 durchrutscht; denn dies würde zu einer entsprechenden Beschleunigung des zugeordneten Kraftfahrzeugsitzes mit einem erhöhten Verletzungsrisiko für den Sitzbenutzer führen. Hierzu ist die Spindelmutter 1 stabil zwischen den Lagerplatten 31, 32 und den Schenkeln 51, 52 der U-förmigen Halterung 5 gehalten und wird in einem Crash-Fall in axialer Richtung a zuverlässig abgestützt, so dass sie nicht in Richtung der Längsachse L entlang der Spindel 100 rutschen kann.

Zur Herstellung des in den Figuren 1a bis 3 dargestellten Verstellgetriebes 1, 2 mit Getriebegehäuse 3, 4 wird bevorzugt ein Mehrkomponenten-Spritzgussverfahren angewandt, wobei bevorzugt sämtliche Verfahrensschritte in einem einzigen Spritzgusswerkzeug durchgeführt werden. Hierbei wird in jenem Werkzeug zunächst die Spindelmutter 1 gespritzt und anschließend werden in dem gleichen Werkzeug die beiden Lagerplatten 31, 32 gespritzt. Hierdurch wird bereits beim Spritzgießen eine Lagerung der Spindelmutter 1 in den beiden Lagerplatten 31, 32 erreicht, so dass kein nachträglicher Zusammenbau der Lagerplatten 31, 32 und der Spindelmutter 1 erforderlich ist.

Sodann wird die Antriebsschnecke 2 in das Spritzgusswerkzeug eingelegt und es werden die äußeren, U-förmigen Gehäuseplatten 41, 42 gespritzt, wobei (aufgrund der im Spritzgusswerkzeug befindlichen Lagerplatten 31, 32 und Antriebsschnecke 2) schon beim Spritzgießen die Verbindung mit den Lagerplatten 31, 32 in den Ausnehmungen 45 und die Lagerung der Antriebsschnecke 2 in den zugeordneten Lageröffnungen 46 erfolgt. Sodann kann das komplett fertiggestellte Getriebegehäuse 3, 4 mit dem darin gelagerten Verstellgetriebe 1, 2 aus dem Spritzgusswerkzeug entnommen werden.

Bei den vorliegend beschriebenen Verfahrensschritten kann die Reihenfolge der Prozessschritte - je nach Auslegung des Verstellgetriebes und des Getriebegehäuses im Einzelfall - geändertwerden. Ferner kann die Montage der Antriebsschnecke 2 auch erst nachträglich durch Einclipsen in das Getriebegehäuse 3, 4 erfolgen.

Im Rahmen eines Mehrkomponenten-Spritzgussverfahrens können dabei für die Spindelmutter 1, die Lagerplatten 31, 32 und die äußeren U-förmigen Gehäuseplatten 41, 42 unterschiedliche Kunststoffe verwendet werden.

Nach einem anderen Herstellungsverfahren werden die Lagerplatten 31, 32 und die äußeren U-förmigen Gehäuseplatten 41, 42 als Einzelteile separat aus Kunststoff hergestellt (spritzgegossen), dann an ihren Steckverbindungen 35, 45 zusammengesteckt und im Bereich der Steckverbindungen durch umformende oder thermische Verfahren, wie z. B. Laserschweißen, Heißverstemmen, Ultraschallschweißen oder in sonstiger Weise, z. B. durch Kleben, aneinander fixiert.

In jedem Fall erfolgt die Verbindung der einzelnen Gehäuseteile 31, 32; 41, 42 (also der Lagerplatten 31, 32 mit den äußeren U-förmigen Gehäuseplatten 41, 42) ausschließlich an den Steckverbindungen 35, 45, mittels derer die Lage der Gehäuseteile 31, 32; 41, 42 zueinander entlang sämtlicher Raumrichtungen festgelegt ist. Als Verbindungsstellen zwischen den Gehäuseteilen 31, 32; 41, 42 dienen bevorzugt lediglich die Steckverbindungen 35, 45, die entweder direkt beim Spritzgießen aller Gehäuseteile in einem Spritzgusswerkzeug hergestellt und fixiert werden oder bei separatem Spritzgießen der einzelnen Gehäuseteile nachträglich durch Zusammenstecken hergestellt und in einem zusätzlichen Verbindungsschritt aneinander fixiert werden.

Als zusätzlicher Verbindungsschritt zur Verbindung der äußeren U-förmigen Gehäuseplatten 41, 42 mit den Lagerplatten 31, 32 im Bereich der Steckverbindungen 35, 45 eignet sich vor allem Laserschweißen. Hierzu sind die äußeren, U-förmigen Gehäuseplatten 41, 42 bevorzugt aus einem für die verwendete Laserstrahlung transparenten Material ausgeführt, während die inneren Lagerplatten 31, 32 die entsprechende Laserstrahlung absorbieren und dabei angeschmolzen werden, so dass eine Verbindung zwischen den inneren Lagerplatten 31, 32 und den äußeren, U-förmigen Gehäuseplatten 41, 42 im Bereich der Steckverbindungen hergestellt wird. Die gewünschte Absorption der Laserstrahlung durch die inneren Lagerplatten 31, 32 kann dabei durch Zugabe von Ruß zu dem Material dieser Lagerplatten erreicht werden.

Vor oder während des Verschweißens der Gehäuseplatten 31, 32; 41, 42 des Getriebegehäuses 3, 4 kann noch axiales Lagerspiel zwischen den Lagerplatten 31, 32 und der Spindelmutter 1 beseitigt werden, indem eine definierte axiale Kraft auf die Lagerplatten 31, 32 aufgebracht wird, bevor der Schweißvorgang abgeschlossen ist.

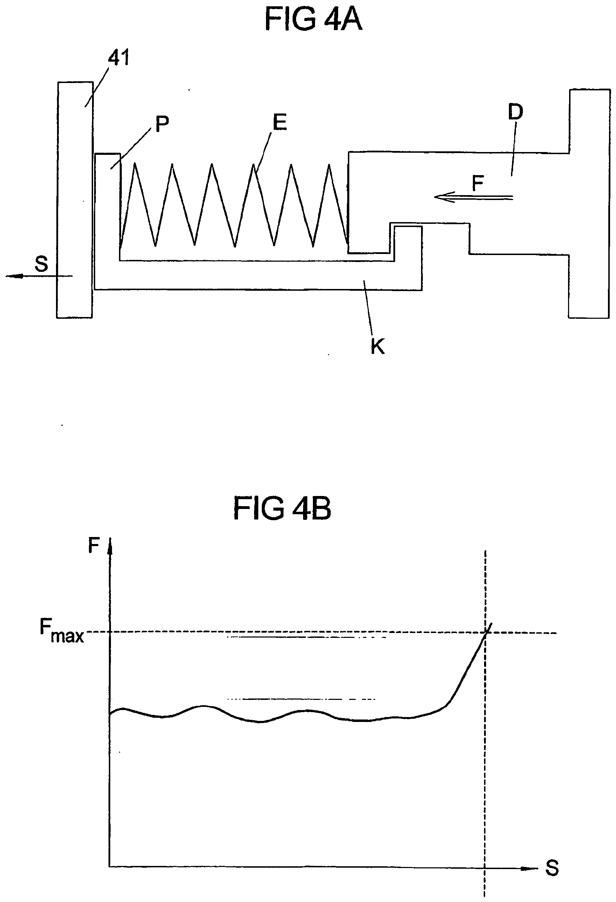

Nachfolgend wird anhand der Figuren 4a bis 7 eine besonders vorteilhafte Methode zur Herausnahme bzw. Reduzierung von eventuellem Spiel, wie z. B. von Lagerspiel der Getriebeelemente 1, 2 des Verstellgetriebes in den zugeordneten Lagerbereichen des Getriebegehäuses 3, 4 und/oder von Spiel beim Zusammenwirken der Getriebeelemente des Verstellgetriebes 1, 2 selbst bzw. von Spiel im Bereich der Steckverbindungen 35, 45 des Getriebegehäuses 3, 4 erläutert werden.

Hierzu wird gemäß Figur 4a während des Anschmelzens von Material im Bereich der Steckverbindungen 35, 45 auf ein äußeres Gehäuseteil 41 in Form einer Gehäuseplatte mittels einer Spannvorrichtung eine Spannkraft F ausgeübt.

Die Spannvorrichtung umfasst eine an der Außenseite der entsprechenden Gehäuseplatte 41 anliegende Spannplatte P auf die über ein elastisches Element E in Form einer Druckfeder ein druckerzeugender, in einer Führungskulisse K geführter, längsbeweglicher Schieber D mit einer definierten Spannkraft F einwirkt. Hierdurch wird die entsprechende Gehäuseplatte 41 bezüglich der in geeigneter Weise räumlich zu fixierenden oder ebenfalls elastisch vorzuspannenden gegenüberliegenden Gehäuseplatte 42 verspannt und gleichzeitig auch bezüglich der dazwischen liegenden Gehäusebaugruppe, bestehend aus den beiden Lagerplatten 31, 32 verspannt.

Die Verspannung erfolgt in dem in Figur 4a dargestellten Ausführungsbeispiel entlang der Montageachse A (vergleiche Figur 1a), entlang der die äußeren Gehäuseplatten 41, 42 zum Zusammenstecken auf die Lagerplatten 31, 32 aufsetzbar sind. Die Verspannung kann jedoch auch quer zur Montagerichtung A erfolgen.

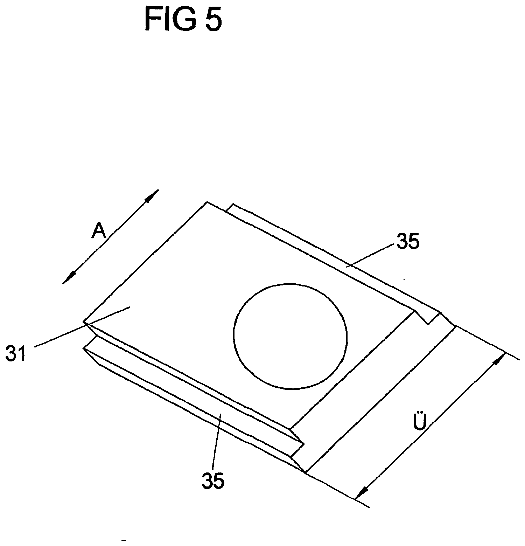

Wie anhand Figur 5 dargestellt, weisen die Lagerplatten 31, 32 in Montagerichtung A bevorzugt ein Übermaß Ü auf, d. h., die durch Vorsprünge gebildeten, als Steckabschnitte dienenden Stirnseiten 35 der jeweiligen Lagerplatte 31 bzw. 32 weisen eine solche Ausdehnung auf, dass die Ausdehnung der jeweiligen Lagerplatte 31, 32 insgesamt entlang der Montageachse A größer ist als im fertig zusammengebauten Getriebegehäuse vorgesehen.

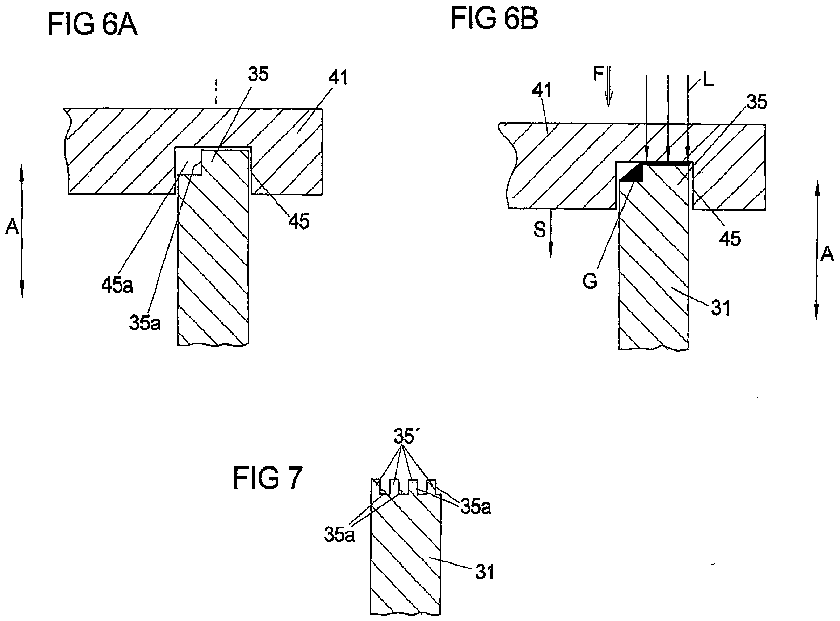

Dieses Übermaß wird gemäß den Figuren 6a und 6b auf das Endmaß reduziert, wenn mittels Laserstrahlung L die durch Vorsprünge gebildeten Stirnseiten 35 der Lagerplatten 31, 32, z. B. durch Laser- oder Ultraschallschweißen, angeschmolzen werden. Hierbei fließt ein Teil des angeschmolzenen Materials der entsprechenden Stirnseite 35 der jeweiligen Lagerplatte 31 oder 32 als Schmelzgut G in einen Freiraum 45a der Ausnehmung 45 der entsprechenden Gehäuseplatte 41, in die die jeweilige Lagerplatte 31 oder 32 zur Bildung eines Eingriffs- bzw. Steckbereiches 35, 45 mit ihrer zugeordneten Stirnseite 35 eingreift. Die Bildung des entsprechenden Freiraums 45a wird ermöglicht durch eine Schulter 35a an der jeweiligen Stirnseite 35 jeder Lagerplatte 31,32.

Der Anschmelzvorgang wird dabei bevorzugt nach dem Aufbringen der Vorspannkräfte auf die hierfür vorgesehenen Elemente des Gehäuses 3, 4, z. B. auf mindestens eine der äußeren Gehäuseplatten 41, 42, durch Inbetriebnahme eines die Laserstrahlung L erzeugenden Lasers in Gang gesetzt.

Unter der Wirkung der Vorspannkraft F führt die Gehäuseplatte 41 eine Setzbewegung s in Vorspannrichtung entlang der Montageachse A aus, wobei die angestrebte Herausnahme bzw. Reduktion von Spiel im Verstellgetriebe 1, 2 sowie in den Lagerstellen der Getriebeelemente des Verstellgetriebes 1, 2 im Gehäuse 3, 4 erfolgen kann.

Figur 7 zeigt eine Abwandlung des stirnseitigen Endes einer Lagerplatte 31, die hier eine Mehrzahl jeweils eine Schulter 35a bildender Vorsprünge 35' aufweist.

Damit die Laserstrahlung L gezielt auf die Vorsprünge 35 der Lagerplatten 31, 32 einwirken kann, sind die Gehäuseplatten 41, 42 bevorzugt aus einem für die entsprechende Laserstrahlung L transparenten Material hergestellt.

Zur Steuerung bzw. Regelung des Anschmelzvorganges kann mindestens ein Abschaltkriterium definiert sein, bei dessen Erreichen der Anschmelz- bzw. Schweißvorgang abgebrochen wird.

Hierzu kann beispielsweise vorgesehen sein, dass die Geschwindigkeit und/oder Dynamik der Setzbewegung s der unter Vorspannung stehenden Gehäuseplatte 41 oder 42 überwacht wird.
Das Abschaltkriterium kann dann beispielsweise darin bestehen, dass die Geschwindigkeit der Setzbewegung s, mit der sich die unter Vorspannung stehende Gehäuseplatte 41 bezüglich der gegenüberliegenden Gehäuseplatte 42 bzw. bezüglich der Lagerplatten 31, 32 bewegt, einen bestimmten Mindestwert unterschreitet. Dies deutet darauf hin, dass im Verstellgetriebe 1, 2 und im Getriebegehäuse 3, 4 noch vorhandenes Spiel herausgenommen wurde und beispielsweise ein Anschlag angefahren wurde, der eine weitere Setzbewegung s nicht mehr zulässt. Dies kann z. B. darauf zurückzuführen sein, dass die Gehäuseplatten 41, 42 in Anschläge der jeweils zugeordneten Stirnseiten der Lagerplatten 31, 32 gefahren sind.

Andererseits kann der Prozess auch kraftgesteuert sein, indem das Abschaltkriterium gemäß Figur 4b durch Überwachung der Reaktionskraft F (unter Beachtung des Prinzips Actio gleich Reactio) definiert ist, die durch die Einwirkung der Spannvorrichtung auf eine Gehäuseplatte 41 erzeugt wird. Diese Kraft F ist am Beginn des Anschmelz- bzw. Schweißvorganges im Wesentlichen konstant, da das elastische Element E in Form einer Druckfeder, über das die Spannvorrichtung auf die Gehäuseplatte 41 einwirkt, eine Nachführung des druckerzeugenden Schiebers D während der Setzbewegung s der Gehäuseplatte 41 in Richtung der Setzbewegung s zulässt. Wenn schließlich der Spielausgleich soweit abgeschlossen ist, dass durch das Zusammenwirken eines Anschlags mit einem Gegenanschlag eine weitere Setzbewegung s nicht mehr möglich ist, dann steigt die Kraft F steil an, wobei das Erreichen einer Maximalkraft Fₘₐₓ als Abschaltkriterium für die Beendigung des Anschmelz- bzw. Schweißvorganges dient.

Weiterhin kann als Abschaltkriterium auch das Erreichen eines bestimmten Setzweges bei der Setzbewegung s, z. B. der Gehäuseplatte 41, verwendet werden. Das Abschaltkriterium wird üblicherweise so gewählt, dass der zu erreichende Setzweg mindestens der Differenz zwisch dem Übermaß Ü der Lagerplatten 31, 32 entlang der Montageachse A und dem angestrebten Endmaß nach Abschluss der Montage des Getriebegehäuses, also insbesondere auch nach Abschluss des Anschmelz- bzw. Schweißvorganges, entspricht.

Ferner lässt sich ein besonders einfaches Abschaltkriterium auch dadurch definieren, dass eine bestimmte Zeitdauer des Anschmelz- bzw. Schweißvorganges vorgegeben wird, also der den Vorgang auslösende Laser nur für einen bestimmten, vorgegebenen Zeitraum betrieben wird.

Auch wenn eines der anderen, nicht auf das Erreichen eines bestimmten Mindestsetzweges gerichteten Abschaltkriterien verwendet wird, so kann auch in diesen Fällen das Erreichen eines vorgegebenen Mindestsetzweges zusätzlich als Qualitätskriterium herangezogen werden, in dem als Voraussetzung für einen ordnungsgemäßen Abschluss des Schweißvorganges angesehen wird, dass die Setzbewegung einen vorgegebenen Mindestsetzweg nicht unterschreitet.

Um das Erreichen des vorgegebenen Mindestsetzweges soweit wie möglich sicherzustellen, kann die Laserleistung in Abhängigkeit von der Geschwindigkeit der Setzbewegung geregelt werden, insbesondere in der Weise, dass die Laserleistung erhöht wird, wenn die Setzgeschwindigkeit während des Schweißvorganges unter einem vorgegebenen Normalwert liegt, und umgekehrt die Laserleistung reduziert wird, wenn die Setzgeschwindigkeit über dem vorgegebenen Normalwert liegt.

Wird der vorgegebene Mindestsetzweg während des Schweißvorganges nicht erreicht, so kann dies ein Hinweis darauf sein, dass die angestrebte Herausnahme des Spiels nicht in vollem Umfang erfolgt ist, so dass das entsprechende Getriebegehäuse nachbehandelt oder gegebenenfalls als fehlerhaftes Teil aussortiert werden muss.

## Patentansprüche

1. Verstellgetriebe für ein Kraftfahrzeug zur Einstellung eines Verstellteiles in einem Kraftfahrzeug, insbesondere eines Sitzteiles, mit einer eine Achse definierenden Spindelmutter (1), die einerseits mit einer Gewindespindel (100) zusammenwirkt und die andererseits in einer äußeren Oberfläche (10) eine Außenverzahnung (15) aufweist, über die sie mit einem weiteren Getriebeelement (2) in Eingriff steht, wobei die Außenverzahnung (15) der Spindelmutter (1) durch radial nach innen weisende Vertiefungen in der äußeren Oberfläche (10) der Spindelmutter (1) gebildet ist und die Außenverzahnung (15) der Spindelmutter (1) sich in axialer Richtung (a) nur über einen Teil der axialen Ausdehnung der äußeren Oberfläche (10) der Spindelmutter (1) erstreckt, so dass die Spindelmutter (1) in axialer Richtung (a) jenseits der Außenverzahnung (15) mindestens einen Endabschnitt (11, 12) ohne Außenverzahnung (15) aufweist, wobei sich eine der Spindel (100) zugeordnete Innenverzahnung (19) der Spindelmutter (1) in axialer Richtung (a) über eine größere Länge erstreckt als die Außenverzahnung (15), so dass sich die Innenverzahnung (19) axial bis in mindestens einen Endabschnitt (11, 12) erstreckt,
**dadurch gekennzeichnet,**
**dass** die Zahntiefe der radial nach innen weisenden Vertiefungen in der äußeren Oberfläche (10) der Spindelmutter (1) zu mindestens einem axialen Ende der Spindelmutter (1) hin abnimmt, wobei die Außenverzahnung (15) in ihren axialen Randbereichen (17, 18) eine Globoidverzahnung ausbildet, dass die Spindelmutter (1) und das weitere Getriebeelement (2) in einem Getriebegehäuse (3, 4) gelagert sind und dass die Endabschnitte (11, 12) der Spindelmutter (1) gleichzeitig als Lager zur Lagerung der Spindelmutter (1) dienen, wobei die axiale und radiale Lagerung durch ein Paar Gehäuseteile (41, 42) des Getriebegehäuses erfolgt.

2. Verstellgetriebe nach Anspruch 1, **dadurch gekennzeichnet, dass** die Zahntiefe der Außenverzahnung (15) zu mindestens einem axialen Ende der Spindelmutter (1) hin gegen Null geht.

3. Verstellgetriebe nach Anspruch 1 oder 2, **dadurch gekennzeichnet, dass** der mindestens eine axiale Endabschnitt (11, 12) der Spindelmutter (1) ohne Außenverzahnung im Wesentlichen kreislinienartig ausgebildet ist.

4. Verstellgetriebe nach einem der vorhergehenden Ansprüche, **dadurch gekennzeichnet, dass** die Außenverzahnung (15) der Spindelmutter (1) durch Vertiefungen der äußeren Oberfläche (10) der Spindelmutter (1) bezogen auf mindestens einen Endabschnitt (11, 12) der Spindelmutter (1) gebildet ist.

5. Verstellgetriebe nach einem der vorhergehenden Ansprüche, **dadurch gekennzeichnet, dass** die Spindelmutter (1) in axialer Richtung (a) beidseits der Außenverzahnung (15) jeweils einen Endabschnitt (11, 12) ohne Außenverzahnung aufweist.

6. Verstellgetriebe nach einem der Ansprüche 3 bis 5, **dadurch gekennzeichnet, dass** die Spindelmutter (1) eine äußere Oberfläche (10) in Form eines Zylindermantels aufweist und dass die Außenverzahnung (15) durch Vertiefungen der äußeren Oberfläche (10) gebildet ist, wobei der Durchmesser des mindestens einen Endabschnittes (11, 12) vorzugsweise größer oder gleich dem Durchmesser der mit Vertiefungen versehenen äußeren Oberfläche (10) ist.

7. Verstellgetriebe nach einem der Ansprüche 3 bis 6, **dadurch gekennzeichnet, dass** die Spindelmutter (1) im Bereich der Außenverzahnung (15) in radialer Richtung (r) nicht über den mindestens einen Endabschnitt (11, 12) hinausragt.

8. Verstellgetriebe nach einem der vorhergehenden Ansprüche, **dadurch gekennzeichnet, dass** die Außenverzahnung (15) in einem in axialer Richtung (a) mittleren Abschnitt (16) ein Evolventenprofil aufweist.

9. Verstellgetriebe nach einem der vorhergehenden Ansprüche, **dadurch gekennzeichnet, dass** die Spindelmutter (1) aus Kunststoff besteht.

10. Verstellgetriebe nach einem der vorhergehenden Ansprüche, **dadurch gekennzeichnet, dass** die Spindelmutter (1) über ihre Außenverzahnung (15) mit einer Schnecke als weiterem Getriebeelement (2) zusammenwirkt.

11. Verstellgetriebe nach einem der vorhergehenden Ansprüche, **dadurch gekennzeichnet, dass** die Zahndicke (d) der mit der Gewindespindel (100) zusammenwirkenden Innenverzahnung (19) der Spindelmutter (1) größer ist als deren Lückenweite (e).

12. Verstellgetriebe nach einem der vorhergehenden Ansprüche, **dadurch gekennzeichnet, dass** das Getriebegehäuse (3, 4) durch Gehäuseteile (31, 32; 41, 42), insbesondere in Form von Gehäuseplatten, gebildet wird.

13. Verstellgetriebe nach Anspruch 12, **dadurch gekennzeichnet, dass** die Gehäuseteile (31, 32; 41, 42) über Steckverbindungen (35, 45) miteinander verbunden und entlang aller Raumrichtungen zueinander ausgerichtet sind.

14. Verstellgetriebe nach Anspruch 12 oder 13, **dadurch gekennzeichnet, dass** das Getriebegehäuse (3, 4) aus einem oder zwei Paaren einander jeweils gegenüberliegender Gehäuseteile (31, 32; 41, 42) besteht.

15. Verstellgetriebe nach einem der Ansprüche 12 bis 14, **dadurch gekennzeichnet, dass** das Getriebegehäuse (3, 4) zwei im Querschnitt U-förmige äußere Gehäuseteile (41, 42) umfasst.

16. Verstellgetriebe nach Anspruch 15, **dadurch gekennzeichnet, dass** die äußeren Gehäuseteile (41, 42) in axialer Richtung (a) einander gegenüberliegend angeordnete Lagerteile (31, 32) zur Lagerung der Spindelmutter (1) umgreifen.

17. Verstellgetriebe nach Anspruch 16, **dadurch gekennzeichnet, dass** die äußeren Gehäuseteile (41, 42) Lagerabschnitte (33, 34) der Lagerteile (31, 32) umfassen.

18. Verstellgetriebe nach einem der vorhergehenden Ansprüche, **dadurch gekennzeichnet, dass** das Getriebegehäuse (3, 4) aus Kunststoff besteht.

19. Verstellgetriebe nach einem der vorhergehenden Ansprüche, **dadurch gekennzeichnet, dass** das Getriebegehäuse Lagerstellen (33, 34; 46), insbesondere in Form von Lageröffnungen, für die Spindelmutter (1) und/oder das weitere Getriebeelement (2) aufweist.

20. Verstellgetriebe nach einem der vorherigen Ansprüche, **dadurch gekennzeichnet, dass** von der Spindelmutter (1) an ihren axialen Endabschnitten (11, 12) jeweils ein Lagerbund (13, 14) zur Lagerung der Spindelmutter (1) absteht.

21. Verstellgetriebe nach einem der vorhergehenden Ansprüche, **dadurch gekennzeichnet, dass** das Getriebegehäuse (3, 4) in mindestens einer Begrenzungswand eine Aussparung (48, 49) aufweist, in die die Spindelmutter (1) und/oder das weitere Getriebeelement (2) radial eingreift.

22. Verstellgetriebe nach Anspruch 21, **dadurch gekennzeichnet, dass** die Aussparung (48, 49) durch eine Öffnung in der jeweiligen Begrenzungswand gebildet wird.

23. Verstellgetriebe nach Anspruch 21, **dadurch gekennzeichnet, dass** die Aussparung durch eine Einbuchtung in der jeweiligen Begrenzungswand gebildet wird.

24. Verstellgetriebe nach einem der Ansprüche 21 bis 23, **dadurch gekennzeichnet, dass** in dem Getriebegehäuse (3, 4) zwei quer zur Achse (L) der Spindelmutter (1) einander gegenüberliegende Aussparungen (46) für die Spindelmutter (1) vorgesehen sind.

25. Verstellgetriebe nach einem der Ansprüche 22 bis 24, **dadurch gekennzeichnet, dass** in einer Begrenzungswand des Getriebegehäuses (3, 4) eine Aussparung (49) für die der Spindelmutter (1) jeweils abgewandte Seite des weiteren Getriebeelementes (2) vorgesehen ist.

26. Verstellgetriebe nach einem der vorhergehenden Ansprüche, **dadurch gekennzeichnet, dass** zwischen dem Getriebegehäuse (3, 4) und einer zugeordneten Halterung (5) des Getriebegehäuses (3, 4) mindestens ein Element zur akustischen Entkopplung angeordnet ist, welches vorzugsweise als federndes Element ausgebildet ist.

27. Verstellgetriebe nach Anspruch 26, **dadurch gekennzeichnet, dass** die elastischen Elemente an dem Getriebegehäuse einteilig angeformt, insbesondere angespritzt sind.

28. Verstellgetriebe nach einem der Ansprüche 8 bis 23, **dadurch gekennzeichnet, dass** zwischen mindestens einem axialen Ende der Spindelmutter (1) und dem Getriebegehäuse (3, 4) ein separater Verstärkungsring angeordnet ist, der bevorzugt auf einem Lagerbund (13, 14) der Spindelmutter (1) gelagert ist.

29. Verstellgetriebe nach einem der vorhergehenden Ansprüche, **dadurch gekennzeichnet, dass** die Gehäuseteile (31, 32; 41, 42) durch Laserschweißen miteinander verbunden sind.

30. Verstellgetriebe nach Anspruch 29, **dadurch gekennzeichnet, dass** das Getriebegehäuse (3, 4) innere Gehäuseteile (31, 32) und äußere Gehäuseteile (41, 42) aufweist, wobei das Material der äußeren Gehäuseteile (41, 42) für die zum Schweißen verwendete Laserstrahlung transparent und das Material der inneren Gehäuseteile (31, 32) für die verwendete Laserstrahlung nicht transparent ausgeführt ist, so dass durch teilweises Aufschmelzen der inneren Gehäuseteile (31, 32) eine Verbindung mit den äußeren Gehäuseteilen (41, 42) herstellbar ist.

31. Verstellgetriebe nach den Ansprüchen 9, 16 und 18, **dadurch gekennzeichnet, dass** zumindest die Spindelmutter (1) und die Lagerplatten (31, 32) des Getriebegehäuses (3, 4) in einem Spritzgusswerkzeug gemeinsam hergestellt sind.

32. Verstellgetriebe nach einem der vorhergehenden Ansprüche, **dadurch gekennzeichnet, dass** das Getriebegehäuse (3, 4) in einer im Querschnitt U-förmigen Halterung (5) aufgenommen ist, mittels der es an einem zugeordneten Verstellteil befestigbar ist.

33. Verfahren zur Herstellung eines Verstellgetriebes mit den Merkmalen der Ansprüche 1, 9, 16 und 18,
**dadurch gekennzeichnet,**
**dass** die Spindelmutter (1) und die Lagerteile (31, 32) gemeinsam in einem Spritzgusswerkzeug in einem mehrstufigen Spritzgussprozess hergestellt werden.

34. Verfahren nach Anspruch 33, **dadurch gekennzeichnet, dass** die Spindelmutter (1) und die Lagerteile (31, 32) in dem Spritzgusswerkzeug nacheinander durch Spritzgießen hergestellt werden, wobei die jeweils zuvor hergestellte Baugruppe in dem Spritzgusswerkzeug verbleibt, während die nachfolgend herzustellende Baugruppe spritzgegossen wird.

35. Verfahren nach Anspruch 335 oder 34, **dadurch gekennzeichnet, dass** weitere Teile des Getriebegehäuses (3, 4) in dem Spritzgusswerkzeug hergestellt werden, während die zuvor hergestellten Baugruppen (1, 31, 32) in dem Spritzgusswerkzeug verbleiben.

36. Verfahren nach einem der Ansprüche 33 bis 35, **dadurch gekennzeichnet, dass** äußere U-förmige Gehäuseteile (41, 42) des Getriebegehäuses (3, 4) in dem Spritzgusswerkzeug hergestellt werden.

37. Verfahren nach einem der Ansprüche 33 bis 36, **dadurch gekennzeichnet, dass** das weitere Getriebeelement (2) in das Spritzgusswerkzeug eingelegt wird, bevor die zur Lagerung des weiteren Getriebeelementes (2) vorgesehenen Teile (41, 42) des Getriebegehäuses (3, 4) durch Spritzgießen hergestellt werden.

38. Verfahren nach einem der Ansprüche 33 bis 37 zur Herstellung eines Verstellgetriebes mit den Merkmalen des Anspruchs 32, **dadurch gekennzeichnet, dass** vor oder während des Verbindens der Gehäuseteile (31, 32; 41, 42) durch Laserschweißen axiales Lagerspiel zwischen inneren Gehäuseteilen (31, 32) des Getriebegehäuses (3, 4) und der Spindelmutter (1) herausgenommen wird.

39. Verfahren nach Anspruch 38, **dadurch gekennzeichnet, dass** das axiale Lagerspiel herausgenommen wird, indem,
a) eine definierte axiale Kraft auf die inneren Gehäuseteile (31, 32) aufgebracht wird,
b) Bereiche der inneren Gehäuseteile (31, 32) aufgeschmolzen werden, die von Steckerbereichen (45) der äußeren Gehäuseteile (41, 42) umschlossen sind, sowie
c) das Laserschweißen abgeschlossen wird, wenn der mindestens eine Endabschnitt (11, 12) der Spindelmutter (1) an dem Getriebegehäuse (3, 4) anliegt.

## Claims

1. An adjusting mechanism for a motor vehicle for adjusting an adjustable part in a motor vehicle, in particular a seat part, with a spindle nut (1) defining an axis, which on the one hand cooperates with a threaded spindle (100) and which on the other hand includes an external toothing (15) in an outer surface (10), through which it is in engagement with a further gearing element (2), wherein the external toothing (15) of the spindle nut (1) is formed by radially inwardly pointing indentations in the outer surface (10) of the spindle nut (1) and the external toothing (15) of the spindle nut (1) extends in axial direction (a) only over a part of the axial extension of the outer surface (10) of the spindle nut (1), so that in axial direction (a) beyond the external toothing (15) the spindle nut (1) has at least one end portion (11, 12) without external toothing (15), wherein in axial direction (a) an internal toothing (19) of the spindle nut (1) associated to the spindle (100) extends over a greater length than the external toothing (15), so that the internal toothing (19) axially extends into at least one end portion (11, 12),
**characterized in**
**that** the tooth depth of the radially inwardly pointing indentations in the outer surface (10) of the spindle nut (1) decreases towards at least one axial end of the spindle nut (1), wherein the external toothing (15) forms a globoid toothing in its axial edge regions (17, 18), that the spindle nut (1) and the further gearing element (2) are mounted in a gearbox housing (3, 4) and that the end portions (11, 12) of the spindle nut (1) at the same time serve as bearings for supporting the spindle nut (1), wherein the axial and radial support is effected by a pair of housing parts (41, 42) of a gearbox housing.

2. The adjusting mechanism according to claim 1, **characterized in that** the tooth depth of the external toothing (15) approaches zero towards at least one axial end of the spindle nut (1).

3. The adjusting mechanism according to claim 1 or 2, **characterized in that** the at least one axial end portion (11, 12) of the spindle nut (1) without external toothing is formed substantially as a circular line.

4. The adjusting mechanism according to any of the preceding claims, **characterized in that** the external toothing (15) of the spindle nut (1) is formed by indentations in the external surface (10) of the spindle nut (1) in relation to at least one end portion (11, 12) of the spindle nut (1).

5. The adjusting mechanism according to any of the preceding claims, **characterized in that** in axial direction (a) on either side of the external toothing (15) the spindle nut (1) each has an end portion (11, 12) without external toothing.

6. The adjusting mechanism according to any of claims 3 to 5, **characterized in that** the spindle nut (1) has an external surface (10) in the form of a cylinder sleeve and that the external toothing (15) is formed by indentations in the external surface (10), wherein the diameter of the at least one end portion (11, 12) preferably is larger than or equal to the diameter of the external surface (10) provided with indentations.

7. The adjusting mechanism according to any of claims 3 to 6, **characterized in that** in the region of the external toothing (15) the spindle nut (1) does not project in radial direction (r) beyond the at least one end portion (11, 12).

8. The adjusting mechanism according to any of the preceding claims, **characterized in that** the external toothing (15) has an involute profile in a middle portion (16) in axial direction (a).

9. The adjusting mechanism according to any of the preceding claims, **characterized in that** the spindle nut (1) is made of plastics.

10. The adjusting mechanism according to any of the preceding claims, **characterized in that** the spindle nut (1) cooperates with a worm as further gearing element (2) through its external toothing (15).

11. The adjusting mechanism according to any of the preceding claims, **characterized in that** the tooth thickness (d) of the internal toothing (19) of the spindle nut (1) cooperating with the threaded spindle (100) is greater than its gap width (e).

12. The adjusting mechanism according to any of the preceding claims, **characterized in that** the gearbox housing (3, 4) is formed by housing parts (31, 32; 41, 42), in particular in the form of housing plates.

13. The adjusting mechanism according to claim 12, **characterized in that** the housing parts (31, 32; 41, 42) are connected with each other through push-fit connections (35, 45) and are aligned relative to each other along all spatial directions.

14. The adjusting mechanism according to claim 12 or 13, **characterized in that** the gearbox housing (3, 4) consists of one or two pairs of housing parts (31, 32; 41, 42) located opposite each other.

15. The adjusting mechanism according to any of claims 12 to 14, **characterized in that** the gearbox housing (3, 4) comprises two external housing parts (41, 42) U-shaped in cross-section.

16. The adjusting mechanism according to claim 15, **characterized in that** the external housing parts (41, 42) surround bearing parts (31, 32) for supporting the spindle nut (1), which are arranged opposite each other in axial direction (a).

17. The adjusting mechanism according to claim 16, **characterized in that** the external housing parts (41, 42) comprise bearing portions (33, 34) of the bearing parts (31, 32).

18. The adjusting mechanism according to any of the preceding claims, **characterized in that** the gearbox housing (3, 4) is made of plastics.

19. The adjusting mechanism according to any of the preceding claims, **characterized in that** the gearbox housing includes bearing points (33, 34; 46), in particular in the form of bearing openings, for the spindle nut (1) and/or the further gearing element (2).

20. The adjusting mechanism according to any of the preceding claims, **characterized in that** a bearing collar (13, 14) for supporting the spindle nut (1) each protrudes from the spindle nut (1) at its axial end portions (11, 12).

21. The adjusting mechanism according to any of the preceding claims, **characterized in that** the gearbox housing (3, 4) includes a recess (48, 49) in at least one boundary wall, in which the spindle nut (1) and/or the further gearing element (2) radially engages.

22. The adjusting mechanism according to claim 21, **characterized in that** the recess (48, 49) is formed by an opening in the respective boundary wall.

23. The adjusting mechanism according to claim 21, **characterized in that** the recess is formed by an indentation in the respective boundary wall.

24. The adjusting mechanism according to any of claims 21 to 23, **characterized in that** in the gearbox housing (3, 4) two recesses (46) are provided for the spindle nut (1), which are located opposite each other transversely to the axis (L) of the spindle nut (1).

25. The adjusting mechanism according to any of claims 22 to 24, **characterized in that** in a boundary wall of the gearbox housing (3, 4) a recess (49) is provided for the side of the further gearing element (2) each facing away from the spindle nut (1).

26. The adjusting mechanism according to any of the preceding claims, **characterized in that** between the gearbox housing (3, 4) and an associated holder (5) of the gearbox housing (3, 4) at least one element is arranged for the acoustic uncoupling, which preferably is formed as resilient element.

27. The adjusting mechanism according to claim 26, **characterized in that** the elastic elements are molded, in particular injection-molded, in one piece on the gearbox housing.

28. The adjusting mechanism according to any of claims 8 to 23, **characterized in that** between at least one axial end of the spindle nut (1) and the gearbox housing (3, 4) a separate reinforcement ring is arranged, which preferably is mounted on a bearing collar (13, 14) of the spindle nut (1).

29. The adjusting mechanism according to any of the preceding claims, **characterized in that** the housing parts (31, 32; 41, 42) are connected with each other by laser welding.

30. The adjusting mechanism according to claim 29, **characterized in that** the gearbox housing (3, 4) has inner housing parts (31, 32) and outer housing parts (41, 42), wherein the material of the outer housing parts (41, 42) is designed transparent for the laser radiation used for welding and the material of the inner housing parts (31, 32) is designed non-transparent for the laser radiation used, so that a connection with the outer housing parts (41, 42) can be produced by partial melting of the inner housing parts (31, 32).

31. The adjusting mechanism according to claims 9, 16 and 18, **characterized in that** at least the spindle nut (1) and the bearing plates (31, 32) of the gearbox housing (3, 4) are made together in one injection molding tool.

32. The adjusting mechanism according to any of the preceding claims, **characterized in that** the gearbox housing (3, 4) is accommodated in a holder (5) U-shaped in cross-section, by means of which it can be fixed on an associated adjustable part.

33. A method for manufacturing an adjusting mechanism with the features of claims 1, 9, 16 and 18,
**characterized in**
**that** the spindle nut (1) and the bearing parts (31, 32) are fabricated together in one injection molding tool in a multi-stage injection molding process.

34. The method according to claim 33, **characterized in that** the spindle nut (1) and the bearing parts (31, 32) are made in the injection molding tool one after the other by injection molding, wherein the assembly each made previously remains in the injection molding tool, while the assembly to be made subsequently is injection-molded.

35. The method according to claim 33 or 34, **characterized in that** further parts of the gearbox housing (3, 4) are made in the injection molding tool, while the assemblies (1, 31, 32) made previously remain in the injection molding tool.

36. The method according to any of claims 33 to 35, **characterized in that** outer U-shaped housing parts (41, 42) of the gearbox housing (3, 4) are made in the injection molding tool.

37. The method according to any of claims 33 to 36, **characterized in that** the further gearing element (2) is inserted into the injection molding tool, before the parts (41, 42) of the gearbox housing (3, 4) provided for supporting the further gearing element (2) are made by injection molding.

38. The method according to any of claims 33 to 37 for manufacturing an adjustable mechanism with the features of claim 32, **characterized in that** before or during the connection of the housing parts (31, 32; 41, 42) by laser welding an axial bearing play between the inner housing parts (31, 32) of the gearbox housing (3, 4) and the spindle nut (1) is removed.

39. The method according to claim 38, **characterized in that** the axial bearing play is removed by
a) applying a defined axial force to the inner housing parts (31, 32),
b) melting regions of the inner housing parts (31, 32) which are enclosed by pushin areas (45) of the outer housing parts (41, 42), and
c) terminating the laser welding when the at least one end portion (11, 12) of the spindle nut (1) bears against the gearbox housing (3, 4).

## Revendications

1. Mécanisme de réglage pour un véhicule automobile pour ajuster une pièce réglable dans un véhicule automobile, en particulier une partie de siège, comprenant un écrou à broche (1) définissant un axe, lequel coopère d'une part avec une broche filetée (100) et présente d'autre part une denture extérieure (15) dans une surface extérieure (10), denture via laquelle il est en engagement avec un autre élément d'engrenage (2), dans lequel la denture extérieure (15) de l'écrou à broche (1) est formée par des renfoncements orientés radialement vers l'intérieur dans la surface extérieure (10) de l'écrou à broche (1), et la denture extérieure (15) de l'écrou à broche (1) s'étend en direction axiale (a) uniquement sur une partie de l'extension axiale de la surface extérieure (10) de l'écrou à broche (1) de telle sorte que l'écrou à broche (1) présente, au-delà de la denture extérieure (15) en direction axiale (a), au moins un tronçon terminal (11, 12) sans denture extérieure (15), dans lequel une denture intérieure (19) de l'écrou à broche (1), associée à la broche (100), s'étend en direction axiale (a) sur une longueur plus grande que la denture extérieure (15), de sorte que la denture intérieure (19) s'étende axialement au moins jusque dans un tronçon terminal (11, 12),
**caractérisé en ce que**
la profondeur de denture des renfoncements orientés radialement vers l'intérieur dans la surface extérieure (10) de l'écrou à broche (1) diminue vers au moins une extrémité axiale de l'écrou à broche (1), dans lequel la denture extérieure (15) forme, dans ses zones de bordure axiales (17, 18), une denture globoïde, **en ce que** l'écrou à broche (1) et l'autre élément d'engrenage (2) sont montés dans un boîtier de mécanisme (3, 4) et **en ce que** les tronçons terminaux (11, 12) de l'écrou à broche (1) servent simultanément de montages pour le montage de l'écrou à broche (1), dans lequel le montage axial et le montage radial est effectué par une paire de parties de boîtier (41, 42) du boîtier de mécanisme.

2. Mécanisme de réglage selon la revendication 1, **caractérisé en ce que** la profondeur des dents de la denture extérieure (15) tend vers zéro vers au moins une extrémité axiale de l'écrou à broche (1).

3. Mécanisme de réglage selon la revendication 1 ou 2, **caractérisé en ce que** l'au moins un tronçon terminal axial (11, 12) de l'écrou à broche (1) sans denture extérieure est réalisé sensiblement à la manière d'une ligne circulaire.

4. Mécanisme de réglage selon l'une des revendications précédentes, **caractérisé en ce que** la denture extérieure (15) de l'écrou à broche (1) est formée par des renfoncements de la surface extérieure (10) de l'écrou à broche (1) par référence à au moins un tronçon terminal (11, 12) de l'écrou à broche (1).

5. Mécanisme de réglage selon l'une des revendications précédentes, **caractérisé en ce que** l'écrou à broche (1) comporte, des deux côtés de la denture extérieure (15) respectivement en direction axiale (a), un tronçon terminal respectif (11, 12) sans denture extérieure.

6. Mécanisme de réglage selon l'une des revendications 3 à 5, **caractérisé en ce que** l'écrou à broche (1) comporte une surface extérieure (10) sous la forme d'une enveloppe cylindrique, et **en ce que** la denture extérieure (15) est formée par des renfoncements de la surface extérieure (10), dans lequel le diamètre d'au moins un tronçon terminal (11, 12) est de préférence supérieur ou égal au diamètre de la surface extérieure (10) pourvue des renfoncements.

7. Mécanisme de réglage selon l'une des revendications 3 à 6, **caractérisé en ce que**, dans la zone de la denture extérieure (15), l'écrou à broche (1) ne dépasse pas en direction radiale (r) au-delà de l'au moins un tronçon terminal (11, 12).

8. Mécanisme de réglage selon l'une des revendications précédentes, **caractérisé en ce que** la denture extérieure (15) présente, dans un tronçon médian (16) en direction axiale (a), un profil à développante.

9. Mécanisme de réglage selon l'une des revendications précédentes, **caractérisé en ce que** l'écrou à broche (1) est en matière plastique.

10. Mécanisme de réglage selon l'une des revendications précédentes, **caractérisé en ce que** l'écrou à broche (1) coopère, via sa denture extérieure (15), avec une vis tangente à titre d'autre élément d'engrenage (2).

11. Mécanisme de réglage selon l'une des revendications précédentes, **caractérisé en ce que** l'épaisseur (d) des dents de la denture intérieure (19), de l'écrou à broche (1), qui coopère avec la broche filetée (100), est supérieure à la largeur des intervalles (e).

12. Mécanisme de réglage selon l'une quelconque des revendications précédentes, **caractérisé en ce que** le boîtier de mécanisme (3, 4) est formé par des parties de boîtier (31, 32 ; 41, 42), en particulier sous la forme de plaques de boîtier.

13. Mécanisme de réglage selon la revendication 12, **caractérisé en ce que** les parties de boîtier (31, 32 ; 41, 42) sont reliées les unes aux autres via des liaisons à enfichage (35, 45) et sont orientées les unes par rapport aux autres le long de toutes les directions dans l'espace.

14. Mécanisme de réglage selon la revendication 12 ou 13, **caractérisé en ce que** le boîtier de mécanisme (3, 4) est constitué d'une ou de deux paires de parties de boîtier (31, 32 ; 41, 42) mutuellement respectivement opposées.

15. Mécanisme de réglage selon l'une des revendications 12 à 14, **caractérisé en ce que** le boîtier de mécanisme (3, 4) comprend deux parties de boîtier (41, 42) extérieures, en forme de U en section transversale.

16. Mécanisme de réglage selon la revendication 15, **caractérisé en ce que** les parties de boîtier extérieures (41, 42) enserrent des parties de montage (31, 32), agencées mutuellement opposées en direction axiale (a), pour le montage de l'écrou à broche (1).

17. Mécanisme de réglage selon la revendication 16, **caractérisé en ce que** les parties de boîtier extérieures (41, 42) comprennent des tronçons de montage (33, 34) des parties de montage (31, 32).

18. Mécanisme de réglage selon l'une des revendications précédentes, **caractérisé en ce que** le boîtier de mécanisme (3, 4) est en matière plastique.

19. Mécanisme de réglage selon l'une des revendications précédentes, **caractérisé en ce que** le boîtier de mécanisme comprend des emplacements de montage (33, 34 ; 46), en particulier sous la forme d'ouvertures de montage, pour l'écrou à broche (1) et/ou pour l'autre élément d'engrenage (2).

20. Mécanisme de réglage selon l'une des revendications précédentes, **caractérisé en ce qu'**une collerette de montage respective (13, 14) pour le montage de l'écrou à broche (1) dépasse de l'écrou à broche (1) à ses tronçons terminaux axiaux (11, 12).

21. Mécanisme de réglage selon l'une des revendications précédentes, **caractérisé en ce que** le boîtier de mécanisme (3, 4) comporte une échancrure (48, 49) dans au moins une paroi de délimitation, dans laquelle l'écrou à broche (1) et/ou l'autre élément d'engrenage (2) s'engage radialement.

22. Mécanisme de réglage selon la revendication 21, **caractérisé en ce que** l'échancrure (48, 49) est formée par une ouverture dans la paroi de délimitation respective.

23. Mécanisme de réglage selon la revendication 21, **caractérisé en ce que** l'échancrure est formée par un creux dans la paroi de délimitation respective.

24. Mécanisme de réglage selon l'une des revendications 21 à 23, **caractérisé en ce que** deux échancrures mutuellement opposées (46) sont prévues pour l'écrou à broche (1) dans le boîtier de mécanisme (3, 4) perpendiculairement à l'axe (L) de l'écrou à broche (1).

25. Mécanisme de réglage selon l'une des revendications 22 à 24, **caractérisé en ce qu'**une échancrure (49) est prévue dans une paroi de délimitation du boîtier de mécanisme (3, 4) pour le côté, respectivement détourné de l'écrou à broche (1), de l'autre élément d'engrenage (2).

26. Mécanisme de réglage selon l'une des revendications précédentes, **caractérisé en ce qu'**au moins un élément destiné au découplage acoustique, qui est de préférence réalisé comme un élément à effet ressort, est agencé entre le boîtier de mécanisme (3, 4) et une monture associée (5) du boîtier de mécanisme (3, 4).

27. Mécanisme de réglage selon la revendication 26, **caractérisé en ce que** les éléments élastiques sont conformés d'une seule pièce sur le boîtier de mécanisme, en particulier par surmoulage.

28. Mécanisme de réglage selon l'une des revendications 8 à 23, **caractérisé en ce qu'**une bague de renforcement séparée est agencée entre au moins une extrémité axiale de l'écrou à broche (1) et le boîtier de mécanisme (3, 4), ladite bague étant de préférence montée sur une collerette de montage (13, 14) de l'écrou à broche (1).

29. Mécanisme de réglage selon l'une des revendications précédentes, **caractérisé en ce que** les parties de boîtier (31, 32 ; 41, 42) sont reliées les unes aux autres par soudage au laser.

30. Mécanisme de réglage selon la revendication 29, **caractérisé en ce que** le boîtier de mécanisme (3, 4) comprend des parties de boîtier intérieures (31, 32) et des parties de boîtier extérieures (41, 42), dans lesquelles le matériau des parties de boîtier extérieures (41, 42) est transparent pour le rayonnement laser utilisé pour le soudage, et le matériau des parties de boîtier intérieures (31, 32) n'est pas transparent pour le rayonnement laser utilisé, de sorte que grâce à une fusion partielle des parties de boîtier intérieures (31, 32), une liaison avec les parties de boîtier extérieures (41, 42) puisse être réalisée.

31. Mécanisme de réglage selon les revendications 9, 16 et 18, **caractérisé en ce qu'**au moins l'écrou à broche (1) et les plaques de montage (31, 32) du boîtier de mécanisme (3, 4) sont fabriqués en commun dans un outil de moulage par injection.

32. Mécanisme de réglage selon l'une des revendications précédentes, **caractérisé en ce que** le boîtier de mécanisme (3, 4) est reçu dans une monture (5) à section en forme de U, au moyen de laquelle il peut être fixé sur une partie réglable associée.

33. Procédé pour réaliser un mécanisme de réglage avec les caractéristiques des revendications 1, 9, 16 et 18,
**caractérisé en ce que**
l'écrou à broche (1) et les parties de montage (31, 32) sont réalisés conjointement dans un outil de moulage par injection, dans un procédé de moulage par injection en plusieurs étapes.

34. Procédé selon la revendication 33, **caractérisé en ce que** l'écrou à broche (1) et les parties de montage (31, 32) sont réalisés les uns après les autres par moulage par injection dans l'outil de moulage par injection, dans lequel le groupe structurel respectivement précédemment fabriqué reste dans l'outil de moulage par injection pendant que le groupe structurel qu'il s'agit de fabriquer ensuite est moulé par injection.

35. Procédé selon la revendication 33 ou 34, **caractérisé en ce que** d'autres parties du boîtier de mécanisme (3, 4) sont fabriquées dans l'outil de moulage par injection pendant que les groupes structurels (1, 31, 32) précédemment fabriqués restent dans l'outil de moulage par injection.

36. Procédé selon l'une des revendications 33 à 35, **caractérisé en ce que** des parties de boîtier extérieures (41, 42) en forme de U du boîtier de mécanisme (3, 4) sont fabriquées dans l'outil de moulage par injection.

37. Procédé selon l'une des revendications 33 à 36, **caractérisé en ce que** l'autre élément de mécanisme (2) est posé dans l'outil de moulage par injection avant que les pièces (41, 42) prévues pour le montage de l'autre élément d'engrenage (2), du boîtier de mécanisme (3, 4) ne soient fabriquées par moulage par injection.

38. Procédé selon l'une des revendications 33 à 37 pour la fabrication d'un mécanisme de réglage avec les caractéristiques de la revendication 32, **caractérisé en ce que** avant ou pendant la liaison des parties de boîtier (31, 32 ; 41, 42) par soudage au laser, un jeu de montage axial entre les parties de boîtier intérieures (31, 32) du boîtier de mécanisme (3, 4) et l'écrou à broche (1) est supprimé.

39. Procédé selon la revendication 38, **caractérisé en ce que** le jeu de montage axial est supprimé
a) en appliquant une force axiale définie sur les parties de boîtier intérieures (31, 32),
b) en faisant fondre des zones des parties de boîtier intérieures (31, 32) qui sont entourées par des zones d'enfichage (45) des parties de boîtier extérieures (41, 42), et
c) le soudage au laser est terminé quand ledit au moins un tronçon terminal (11, 12) de l'écrou à broche (1) est appliqué contre le boîtier de mécanisme (3, 4).
